# EUROPEAN PATENT APPLICATION

(11) **EP 4 788 047 A1**
(43) Date of publication of application: **05.08.2026**
(21) Application number: 24945391.1
(22) Date of filing: 19.12.2024
(51) Int. Cl.: H04W 76/14, G06F 3/0485, G06F 3/0486

(54) **DATA TRANSMISSION METHOD, AND DEVICES**

(30) Priority: 20.06.2024 CN 202410807641; 03.09.2024 CN 202411233649
(71) Applicant: HUAWEI TECHNOLOGIES CO., LTD., Shenzhen 518129 (CN)
(72) Inventor: WANG, Xiaoyu, Shenzhen, Guangdong 518129 (CN); YE, Fei, Shenzhen, Guangdong 518129 (CN); WENG, Jiawei, Shenzhen, Guangdong 518129 (CN)
(74) Representative: Maiwald GmbH
(86) International application number: PCT/CN2024/140715
(87) International publication number: WO 2025/260667

(57) **Abstract**

This application provides a data transmission method and a device, and relates to the field of communication technologies. The method may be applied to a communication system, and the communication system includes a first device and a second device. The first device detects that the second device approaches or touches the first device, and establishes a communication connection to the second device. The first device may send object data of a first transmission object to the second device, and display a first sending animation in a process of sending the object data of the first transmission object to the second device, where the first sending animation is used to present that a first image corresponding to the first transmission object is moved to a screen boundary of the first device until the first image is moved out of a screen of the first device. The second device receives the object data of the first transmission object, and displays a first receiving animation, where the first receiving animation is used to present that the first image appears from a screen boundary of the second device and is moved to a screen of the second device. A user does not need to perform a series of complex operations in a data transmission process. This can effectively improve efficiency of cross-device data transmission.

## Description

This application claims priorities to Chinese Patent Application No. 202410807641.1, filed with the China National Intellectual Property Administration on June 20, 2024, and entitled "TRANSMISSION METHOD, ELECTRONIC DEVICE, AND RELATED APPARATUS", and to Chinese Patent Application No. 202411233649.8, filed with the China National Intellectual Property Administration on September 3, 2024, and entitled "DATA TRANSMISSION METHOD AND DEVICE", both of which are incorporated herein by reference in their entireties.

### TECHNICAL FIELD

This application relates to the field of communication technologies, and in particular, to a data transmission method and a device.

### BACKGROUND

With development of communication technologies and improvement of people's standards of living, people usually have terminal devices such as portable terminal devices like a smartphone, a smartwatch, and a tablet computer. These terminal devices provide various services such as file storage and file preview for people. Cross-device data transmission has become a common operation in people's daily life.

Usually, in a data transmission scenario, for example, when a first user (a user who sends a file) shares the file with a second user (a user who receives the file), the first user may send, through a first device, file data to a second device used by the second user. Specifically, the first user needs to find the file on a terminal device and select the second user for sending the file by using an application, so that the second user can download the file by using the application. Alternatively, the first user uploads the file to cloud storage, shares a link corresponding to the file to an application, and selects the second user for sending the file. In this way, the second user is redirected to the cloud storage through the link and downloads the file from the cloud storage.

However, in the data transmission process, both the first user and the second user need to perform a series of complex operations, and the entire data transmission process needs a long time, reducing user experience.

### SUMMARY

This application provides a data transmission method and a device. Different devices may establish a communication connection after approaching or touching each other, and directly trigger a data transmission process. A user does not need to perform a series of complex operations in the data transmission process. This can effectively improve efficiency of cross-device data transmission.

To achieve the foregoing objective, this application uses the following technical solutions.

According to a first aspect, this application provides a data transmission method, applied to a communication system, where the communication system includes a first device and a second device, a display picture of the first device includes a first transmission object, and the method includes:

The first device detects that the second device approaches or touches the first device, and establishes a communication connection to the second device. The first device may send object data of the first transmission object to the second device, and display a first sending animation in a process of sending the object data of the first transmission object to the second device, where the first sending animation is used to present that a first image corresponding to the first transmission object is moved to a screen boundary of the first device until the first image is moved out of a screen of the first device. The second device receives the object data of the first transmission object, and displays a first receiving animation, where the first receiving animation is used to present that the first image appears from a screen boundary of the second device and is moved to a screen of the second device.

By displaying the animations, the two devices can present that the first image of the first transmission object travels between the two screens, and a dynamic transmission effect of the object data of the first transmission object in a transmission process can be further reflected. Therefore, more intuitive and flexible data transmission experience can be provided for a user, thereby improving user experience.

In addition, in this embodiment of this application, after detecting that the second device approaches or touches the first device, and establishing the communication connection to the second device, the first device directly triggers sending of the object data of the first transmission object to the second device. The user only needs to control display of the first transmission object in the display picture of the first device, and the user does not need to perform a series of complex operations in a data transmission process. This can effectively improve efficiency of cross-device data transmission, to improve user experience.

In a feasible implementation, a display picture of the second device includes a second transmission object, and the method further includes:

The second device sends object data corresponding to the second transmission object to the first device, and displays a second sending animation in a process of sending the object data corresponding to the second transmission object to the first device, where the second sending animation is used to present that a second image corresponding to the second transmission object is moved to the screen boundary of the second device until the second image is moved out of the screen of the second device.

The first device receives the object data corresponding to the second transmission object, and displays a second receiving animation, where the second receiving animation is used to present that the second image appears from the screen boundary of the first device and is moved to the screen of the first device.

In this way, in this embodiment of this application, the second device may also transmit data to the first device. By displaying the receiving animation and the sending animation, the two devices can present that the second image of the second transmission object travels between the two screens, and a dynamic transmission effect of the object data of the second transmission object in a transmission process can be further reflected. The user does not need to perform a series of complex operations in a data transmission process. This can effectively improve efficiency of cross-device data transmission.

In a feasible implementation, when the second device sends the object data of the second transmission object in the process in which the first device sends the object data of the first transmission object, the first device simultaneously displays the first sending animation and the second receiving animation, and the second device simultaneously displays the first receiving animation and the second sending animation.

Alternatively, the first device displays the second receiving animation after displaying the first sending animation, and the second device displays the first receiving animation after displaying the second sending animation.

Alternatively, the first device displays the first sending animation after displaying the second receiving animation, and the second device displays the second sending animation after displaying the first receiving animation.

In this embodiment of this application, in the process of sending the object data of the first transmission object, the first device may receive the object data that is of the second transmission object and that is sent by the second device. Similarly, in the process of sending the object data of the second transmission object, the second device may also receive the object data that is of the first transmission object and that is sent by the first device. In other words, the first device and the second device each may perform a data sending process and a data receiving process. Data sending and data receiving may be performed in sequence, or may be performed simultaneously. This improves flexibility of data transmission and improves user experience.

In addition, in this embodiment of this application, a receiving animation and a sending animation may be displayed in a data receiving process and a data sending process. The sending animation and the receiving animation may have a same display sequence, or may have different display sequences. A device may simultaneously display the receiving animation and the sending animation, may first display the receiving animation and then display the sending animation, or may first display the sending animation and then display the receiving animation. This improves richness of displayed content and interest of cross-device data transmission for the user. The user can obtain better data transmission experience.

According to a second aspect, an embodiment of this application provides a data transmission method, applied to a first device, where a display picture of the first device includes a first transmission object, and the method includes:

The first device may detect that the first device approaches or touches a second device, establish a communication connection to the second device, and send object data of the first transmission object to the second device. The first device may further display a first sending animation in a process of sending the object data of the first transmission object to the second device, where the first sending animation is used to present that a first image corresponding to the first transmission object is moved to a screen boundary of the first device until the first image is moved out of a screen of the first device.

In this way, in this embodiment of this application, the first device detects that the first device approaches or touches the second device, establishes the communication connection to the second device, and sends the object data of the first transmission object to the second device. In addition, the first device may further display a sending animation. In a process of presenting the sending animation, an image may be moved out of a screen from a direction of a top end surface, so that a scenario in which body moment of a user is to deliver an item to the other party during exchange of the item in life can be simulated. Therefore, more intuitive and flexible data transmission experience can be provided for the user, thereby improving user experience.

In a feasible implementation, the first device may further display the first image. The first device may display the first sending animation in response to a first trigger operation on the first image. The first trigger operation includes an operation indicating the first image to move to the screen boundary of the first device.

In this way, the user may perform an operation on the first image to trigger a data sending process. This enhances interactivity and operability between the user and a device and makes data transmission between devices more intuitive.

In a feasible implementation, in a moving process of the first image, a display form of the first image in the first sending animation changes as a moving location changes.

Specifically, a display size of the first image in the first sending animation in the moving process gradually decreases as the moving location changes until the first image fades out of the screen of the first device.

In this way, in this embodiment of this application, in a process of presenting the first sending animation, the display form of the first image may change as the moving location changes. This improves richness of display forms in an interface, so that the user can more intuitively perceive a data transmission process, and visual experience of the user is improved.

In a feasible implementation, the first device may obtain a target direction, where the target direction is a direction in which a screen center of the first device points to a top end surface of the first device, and the first sending animation is used to present that the first image is moved to the screen boundary of the first device in the target direction until the first image is moved out of the screen of the first device.

In this way, in this embodiment of this application, in a process of presenting a sending animation, an image may be moved out of a screen from a direction of a top end surface, so that a scenario in which body moment of a user is to deliver an item to the other party during exchange of the item in life can be simulated. Therefore, more intuitive and flexible data transmission experience can be provided for the user, thereby improving user experience.

In a feasible implementation, a display picture of the second device includes a second transmission object, and the method further includes: The first device receives object data that corresponds to the second transmission object and that is sent by the second device, and displays a second receiving animation, where the second receiving animation is used to present that a second image corresponding to the second transmission object appears from the screen boundary of the first device and is moved to the screen of the first device.

In this way, in this embodiment of this application, the first device may receive data sent by the second device, and display a receiving animation. The second image in the receiving animation may be moved from the top end surface of the first device to the screen. Therefore, more intuitive and flexible data transmission experience can be provided for the user, thereby improving user experience.

In a feasible implementation, in a process in which the first image in the first sending animation is moved in the target direction, a moving direction of the second image in the second receiving animation is opposite to the target direction.

In this way, in this embodiment of this application, a moving direction of the first image in the first sending animation is opposite to the moving direction of the second image in the second receiving animation, so that cross-device data transmission can be more intuitive. Therefore, visual experience of the user is improved.

In a feasible implementation, the display form of the first image in the first sending animation is different from a display form of the second image in the second receiving animation.

In this way, in this embodiment of this application, different sending animations and different receiving animations can be distinguished, so that the user can more intuitively perceive a data transmission process corresponding to data receiving and data sending. This improves richness of animation display, so that cross-device data transmission is more intuitive. Therefore, visual experience of the user is improved.

In a feasible implementation, when the first device receives, in the process of sending the object data of the first transmission object, the object data that is of the second transmission object and that is sent by the second device, the first sending animation and the second receiving animation are simultaneously displayed, or the first sending animation is displayed after the second receiving animation is displayed, or the second receiving animation is displayed after the first sending animation is displayed.

In this way, in the process of sending the object data of the first transmission object, the first device may receive the object data that is of the second transmission object and that is sent by the second device. In other words, the first device may perform a data sending process and a data receiving process. Data sending and data receiving may be performed in sequence, or may be performed simultaneously. This improves flexibility of data transmission and improves user experience.

In addition, the first device may display the receiving animation and the sending animation based on an execution time sequence of data sending and data receiving. In this way, in this embodiment of this application, a device simultaneously sends data and receives data, and can also simultaneously display a receiving animation and a sending animation in a process of receiving data and sending data. Certainly, the receiving animation and the sending animation may alternatively be displayed in sequence. This further improves richness of displayed content and interest of cross-device data transmission for the user. The user can obtain better data transmission experience.

In a feasible implementation, an animation speed of the second receiving animation is negatively correlated with a data amount of the object data of the second transmission object, and an animation speed of the first sending animation is negatively correlated with a data amount of the object data of the first transmission object, or the animation speed of the first sending animation is positively correlated with an operation speed of the first trigger operation.

In this way, in this embodiment of this application, an animation speed corresponding to an animation may vary with a data amount of transmitted data, or may vary with an operation speed of a user-triggered operation. The user can intuitively perceive the data amount of the transmitted data through the animation. The user can also control, by changing the operation speed, a speed of presenting the animation. This further improves richness of displayed content, and interest and interactivity of cross-device data transmission for the user. The user can obtain better data transmission experience.

In a feasible implementation, when the first device receives, in the process of sending the object data of the first transmission object, the object data that is of the second transmission object and that is sent by the second device, in response to a second trigger operation on the first image, the first device does not display the first image and cancels sending of the object data of the first transmission object to the second device. The second device may keep displaying the second receiving animation.

In this way, in this embodiment of this application, a device may interrupt data sending. The user can interrupt a process in which a device sends data. In addition, when receiving data, the device may further display a corresponding receiving animation. Flexibility of cross-device data transmission is improved. Therefore, user experience is improved.

In a feasible implementation, the object data corresponding to the second transmission object includes the second image, and the second image indicates the second transmission object in the second device. The method further includes: After displaying the second receiving animation, the first device may display the second image, and obtain the second transmission object based on the second image in response to a third trigger operation on the second image. The first device may further search for a target application matching the second transmission object, and display the second transmission object by using the target application.

In this way, in this embodiment of this application, after receiving a second image such as an object snapshot sent by a peer device, a local device may automatically obtain a transmission object corresponding to the object snapshot after receiving is completed. In addition, a related application may be further automatically started to display the transmission object, and the user does not need to perform other complex operations, to improve working efficiency of a data transmission process and a data display process.

In a feasible implementation, the object data corresponding to the second transmission object includes the second image and content data of the second transmission object, and the method further includes: The first device may display the second image after displaying the second receiving animation. In response to a third trigger operation on the second image, the second device may search for a target application matching the content data of the second transmission object, and display the second transmission object by using the target application.

In this way, in this embodiment of this application, after receiving content data sent by a peer device, a local device may automatically start a related application after receiving is completed, to display a transmission object corresponding to the content data, and the user does not need to perform other complex operations, to improve working efficiency of a data transmission process and a data display process.

In a feasible implementation, the object data of the first transmission object includes the first image, where the first image indicates the first transmission object and is used by the second device to obtain the first transmission object.

Alternatively, the object data of the first transmission object includes the first image and content data of the first transmission object, where the content data of the first transmission object is used by the second device to obtain the first transmission object. In this way, the second device may obtain the first transmission object based on the first image in the object data, or directly obtain the first transmission object based on the content data in the object data. The user can obtain the first transmission object without performing a series of complex operations. User experience is improved.

In a feasible implementation, in a process in which the first device sends the object data of the first transmission object and in a process in which the first device receives the object data of the second transmission object, a device distance between the first device and the second device is less than or equal to a communication distance for establishing the communication connection between the first device and the second device.

In this way, in this embodiment of this application, in a data transmission process, the user does not need to keep two devices approaching or touching each other. The user can freely move the devices provided that a device distance between the two devices needs to be kept within a communication distance for a communication connection, without limiting device postures of the two devices. Therefore, flexibility of cross-device data transmission is improved, and user experience is improved.

In a feasible implementation, the first image includes an object screenshot of the first transmission object or an object snapshot corresponding to the first transmission object, and the method further includes: The first device generates the object screenshot based on the first transmission object displayed in the display picture; or extracts key object data from transmission object data of the first transmission object, and generates the object snapshot based on the key object data.

In a feasible implementation, the method further includes: The first device may display a target animation, where the target animation is used to present that it has been detected that the first device approaches or touches the second device. In this way, a process in which a device is touching or approaching another device can be more intuitively prompted to the user.

In a feasible implementation, the first transmission object includes at least one of a file, a folder, a contact, or an application.

According to a third aspect, an embodiment of this application provides a data transmission method, applied to a second device, where the method includes:

The second device detects that the second device approaches or touches a first device, establishes a communication connection to the first device, and displays a first receiving animation in a process of receiving object data that corresponds to a first transmission object and that is sent by the first device. The first receiving animation is used to present that a first image appears from a screen boundary of the second device and is moved to a screen of the second device, where the first image is an image corresponding to the first transmission object displayed in the first device.

In this way, in this embodiment of this application, the second device detects that the second device approaches or touches the first device, establishes the communication connection to the first device, and receives the object data that corresponds to the first transmission object and that is sent by the first device. The second device may further display a receiving animation, and the first image in the receiving animation may be moved from a top end surface of the second device to the screen. Therefore, more intuitive and flexible data transmission experience can be provided for the user, thereby improving user experience.

In a feasible implementation, a display picture of the second device includes a second transmission object, and the method further includes: The second device may send object data corresponding to the second transmission object to the first device. The second device may further display a second sending animation in a process of sending the object data corresponding to the second transmission object to the first device, where the second sending animation is used to present that a second image corresponding to the transmission object is moved to the screen boundary of the second device until the second image is moved out of the screen of the second device.

In this way, in this embodiment of this application, the second device may send the object data of the second transmission object to the first device. In addition, the second device may further display a sending animation. In a process of presenting the sending animation, an image may be moved out of the screen from a direction of the top end surface, so that a scenario in which body moment of a user is to deliver an item to the other party during exchange of the item in life can be simulated. Therefore, more intuitive and flexible data transmission experience can be provided for the user, thereby improving user experience.

According to a fourth aspect, an embodiment of this application provides an electronic device, where the electronic device includes a memory and one or more processors, the memory is coupled to the processor, the memory stores computer program code, the computer program code includes computer instructions, and when the computer instructions are executed by the processor, the electronic device is caused to perform the method according to the second aspect or perform the method according to the third aspect.

According to a fifth aspect, an embodiment of this application provides a communication system, where the communication system includes a first device and a second device, and a display picture of the first device includes a first transmission object.

The first device is configured to: detect that the second device approaches or touches the first device, and establish a communication connection to the second device.

The first device is configured to send object data of the first transmission object to the second device.

The first device is configured to display a first sending animation in a process of sending the object data of the first transmission object to the second device, where the first sending animation is used to present that a first image corresponding to the first transmission object is moved to a screen boundary of the first device until the first image is moved out of a screen of the first device. The second device is configured to: receive the object data of the first transmission object, and display a first receiving animation, where the first receiving animation is used to present that the first image appears from a screen boundary of the second device and is moved to a screen of the second device.

According to a sixth aspect, an embodiment of this application provides a computer-readable medium, where the computer-readable storage medium stores instructions, and when the instructions are run on an electronic device, the electronic device is caused to perform the method according to the second aspect or perform the method according to the third aspect.

According to a seventh aspect, an embodiment of this application provides a computer program product, where the computer program product includes instructions, and when the instructions are run on a computer or a processor, the computer or the processor is caused to perform the method according to the second aspect or perform the method according to the third aspect.

### BRIEF DESCRIPTION OF DRAWINGS

FIG. 1 is a diagram of a structure of a transmission system according to an embodiment of this application;
FIG. 2 is a diagram of a hardware structure of a mobile phone according to an embodiment of this application;
FIG. 3 is a diagram of a software structure of a mobile phone according to an embodiment of this application;
FIG. 4 is a schematic flowchart of a data transmission method according to an embodiment of this application;
FIG. 5(A) to FIG. 5(D) are a diagram of an interface of a target animation according to an embodiment of this application;
FIG. 6(A) and FIG. 6(B) are a diagram of an interface of a first image according to an embodiment of this application;
FIG. 7(A) and FIG. 7(B) are a diagram of an interface of a first location and a second location according to an embodiment of this application;
FIG. 8(A) and FIG. 8(B) are a diagram of an interface of canceling sending according to an embodiment of this application;
FIG. 9A and FIG. 9B are a diagram of an interface of a first sending animation and a first receiving animation according to an embodiment of this application;
FIG. 10A and FIG. 10B are a diagram of an interface of a second receiving animation according to an embodiment of this application;
FIG. 11A to FIG. 11C are a diagram 1 of an interface of displaying a second file according to an embodiment of this application;
FIG. 12A to FIG. 12C are a diagram 2 of an interface of displaying a second file according to an embodiment of this application;
FIG. 13(A) and FIG. 13(B) are a diagram 1 of an interface on which an animation corresponds to a preset display time sequence according to an embodiment of this application;
FIG. 14(A) and FIG. 14(B) are a diagram 2 of an interface on which an animation corresponds to a preset display time sequence according to an embodiment of this application;
FIG. 15(A) and FIG. 15(B) are a diagram 3 of an interface on which an animation corresponds to a preset display time sequence according to an embodiment of this application; and
FIG. 16 is a diagram of a structure of a mobile phone according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in descriptions of this application, unless otherwise specified, "a plurality of" means two or more. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes.

A person skilled in the art may understand that the terms such as "first" and "second" do not limit a quantity or an execution sequence, and the terms such as "first" and "second" do not indicate a definite difference. In addition, in some embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a device architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of the device architecture and emergence of a new service scenario, the technical solutions provided in embodiments of this application are also applicable to similar technical problems.

With development of communication technologies and improvement of people's living standards, cross-device data transmission has become a common operation in people's daily life. In a related technology, in a data transmission scenario, data transmission can be implemented only after a sender performs a series of complex operations. For example, a first user needs to find a file on a terminal and select a second user for sending the file by using an application, and the second user needs to start the application to download the file, to implement a data transmission process. It can be learned that the entire data transmission process needs a long time, and user experience is poor.

To resolve the problem, embodiments of this application provide a data transmission method and a device, applied to a communication system. The communication system includes a first device and a second device. A display picture of the first device includes a first transmission object. The method includes: The first device detects that the second device approaches or touches the first device, and establishes a communication connection to the second device. The first device may send object data of the first transmission object to the second device. The first device may further display a first sending animation in a process of sending the object data of the first transmission object to the second device, where the first sending animation is used to present that a first image corresponding to the first transmission object is moved to a screen boundary of the first device until the first image is moved out of a screen of the first device. The second device receives the object data of the first transmission object, and displays a first receiving animation, where the first receiving animation is used to present that the first image appears from a screen boundary of the second device and is moved to a screen of the second device.

In this way, in embodiments of this application, after the first device establishes the communication connection to the second device, the first device may send the object data of the first transmission object to the second device, and display the first sending animation. The second device may receive the object data of the first transmission object, and display the first receiving animation. The first sending animation can present that the first image is moved to the screen boundary of the first device until the first image is moved out of the screen of the first device, and the first receiving animation is used to present that the first image appears from the screen boundary of the second device and is moved to the screen of the second device.

By displaying the animations, the two devices can present that the first image of the first transmission object travels between the two screens, and a dynamic transmission effect of the object data of the first transmission object in a transmission process can be further reflected. Therefore, more intuitive and flexible data transmission experience can be provided for the user, thereby improving user experience.

In addition, in this embodiment of this application, after detecting that the second device approaches or touches the first device, and establishing the communication connection to the second device, the first device directly triggers sending of the object data of the first transmission object to the second device. The user only needs to control display of the first transmission object in the display picture of the first device, and the user does not need to perform a series of complex operations in a data transmission process. This can effectively improve efficiency of cross-device data transmission, to improve user experience.

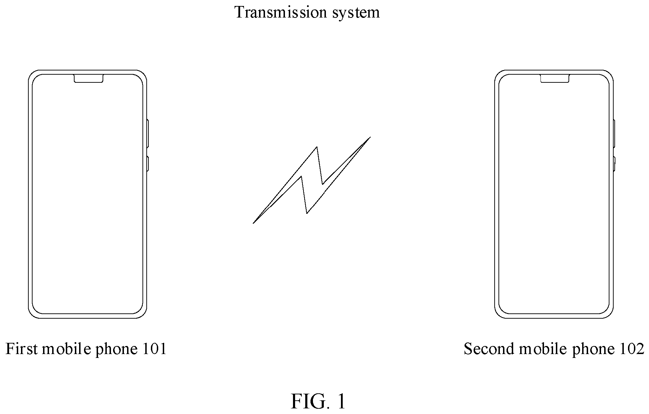

The data transmission method provided in this application may be applied to a transmission system. With reference to FIG. 1, the transmission system provided in an embodiment of this application may include a first device (for example, a first mobile phone 101 used by a first user) and a second device (for example, a second mobile phone 102 used by a second user).

In some embodiments, a communication connection may be established between the first device and the second device. The communication connection may be a wired communication connection or a wireless communication connection.

A wireless communication technology for establishing the wireless communication connection includes, but is not limited to, at least one of the following: a wireless local area network (wireless local area network, WLAN) (for example, a wireless fidelity (wireless fidelity, Wi-Fi) network), Bluetooth (Bluetooth, BT) (for example, conventional Bluetooth or Bluetooth low energy (Bluetooth low energy, BLE)), near field communication (near field communication, NFC), ZigBee (ZigBee), frequency modulation (frequency modulation, FM), infrared (infrared, IR), and the like.

The first device may be used as a file sending end device, or may be understood as a sharing device. For example, the first device includes electronic devices such as a mobile phone, a tablet computer, a notebook computer, a netbook, a personal digital assistant (personal digital assistant, PDA), a wearable device, and an artificial intelligence (artificial intelligence, AI) device.

An operating system installed on the first device includes, but is not limited to, iOS^{®}, Android^{®}, HarmonyOS^{®}, Windows^{®}, Linux^{®}, or another operating system. Certainly, the first device may alternatively not be installed with an operating system. A specific type of the first device, whether the operating system is installed, and a type of the operating system when the operating system is installed are not limited in this application.

The second device may be used as a file receiving end device, or may be understood as a shared device. For example, the second device includes electronic devices such as a mobile phone, a tablet computer, a notebook computer, an ultra-mobile personal computer (ultra-mobile personal computer, UMPC), a netbook, a PDA, a wearable device, an artificial intelligence AI device, and a vehicle-mounted device.

An operating system installed on the second device includes, but is not limited to, iOS^{®}, Android^{®}, HarmonyOS^{®}, Windows^{®}, Linux^{®}, or another operating system. A specific type of the second device and the installed operating system are not limited in this application.

For example, in a scenario in which the transmission system includes the first device and the second device, a display picture of the first device includes a first transmission object, and the first device detects that the second device approaches or touches the first device, and establishes a communication connection to the second device. The first device may send object data of the first transmission object to the second device. The first device may further display a first sending animation in a process of sending the object data of the first transmission object to the second device, where the first sending animation is used to present that a first image corresponding to the first transmission object is moved to a screen boundary of the first device until the first image is moved out of a screen of the first device. The second device receives the object data of the first transmission object, and displays a first receiving animation, where the first receiving animation is used to present that the first image appears from a screen boundary of the second device and is moved to a screen of the second device.

Certainly, the transmission system provided in this embodiment of this application may further include another electronic device in addition to the first device and the second device. The transmission system provided in this embodiment of this application includes, but is not limited to, interaction between two devices, and information exchange between one device and a plurality of devices. A person skilled in the art may determine types and a quantity of electronic devices based on an actual requirement, and these designs do not go beyond the protection scope of embodiments of this application.

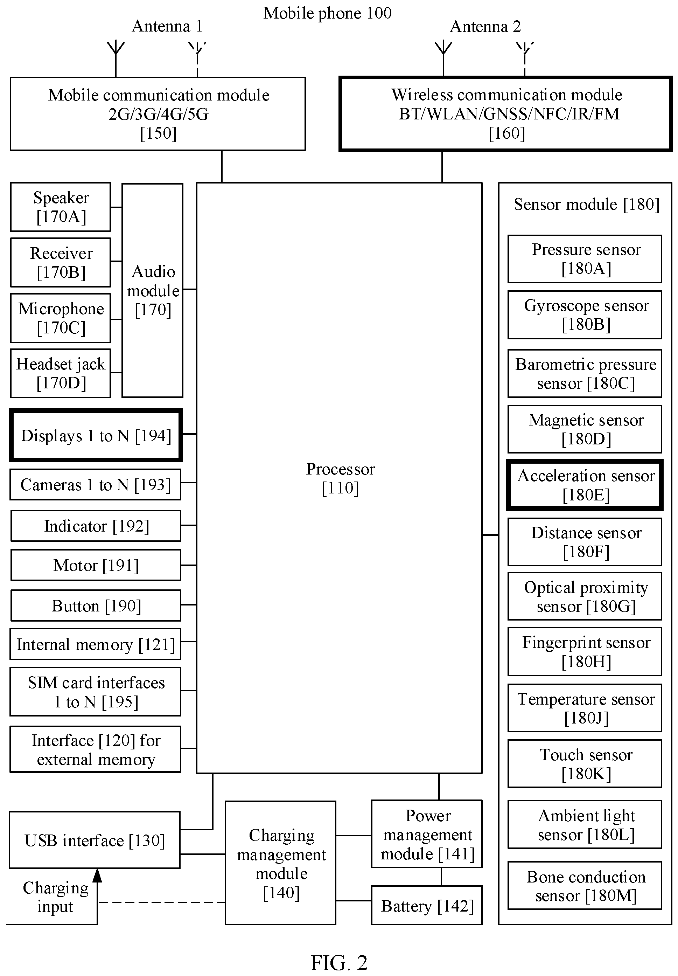

The first device and the second device in embodiments of this application may be implemented through different devices. For example, the electronic device in embodiments of this application may be implemented by using a mobile phone 100 in FIG. 2. FIG. 2 is a diagram of a hardware structure of a mobile phone according to an embodiment of this application.

As shown in FIG. 2, the mobile phone 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include sensors such as a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M.

It can be understood that the structure illustrated in this embodiment of this application does not constitute a specific limitation on the mobile phone 100. In other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the mobile phone 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100 may be configured to cover a single communication frequency band or a plurality of communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may support a 2G/3G/4G/5G/future communication network or a more advanced communication standard. This is not limited in this application.

The wireless communication module 160 may provide a solution that is applied to the mobile phone 100 and that includes wireless communication such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The mobile phone 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display a user interface and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1.

The mobile phone 100 may implement a photographing function through the ISP, the camera 193, the video codec, the GPU, the display 194, the application processor, and the like.

The ISP may be configured to process data fed back by the camera 193. For example, during image shooting, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The mobile phone 100 may implement an audio function such as music playing or recording through the audio module 170, the speaker 170A, the receiver 170B, the microphone 170C, the headset jack 170D, the application processor, and the like.

In some examples, a first transmission object may be displayed in a display screen of a first mobile phone, and the first transmission object may include a first file. An acceleration sensor in the first mobile phone detects that a second mobile phone approaches or touches the first mobile phone, and may establish a communication connection to the second mobile phone. After establishing the communication connection to the second mobile phone, the first mobile phone may send file data of the first file to the second mobile phone through a wireless communication module.

In a process of sending the file data of the first file to the second mobile phone, the first mobile phone may control the display screen to display a first sending animation, where the first sending animation is used to present that a first image corresponding to the first file is moved to a boundary of the display screen of the first mobile phone until the first image is moved out of the display screen of the first mobile phone. The second mobile phone may receive the file data of the first file, and control a display screen to display a first receiving animation, where the first receiving animation is used to present that the first image appears from a boundary of the display screen of the second mobile phone and is moved to the display screen of the second mobile phone.

A layered architecture, an event-driven architecture, a micro-core architecture, a micro-service architecture, or a cloud architecture may be used for a software system of the mobile phone 100. In an embodiment of this application, an Android system of the layered architecture is used as an example to describe a software structure of the mobile phone 100.

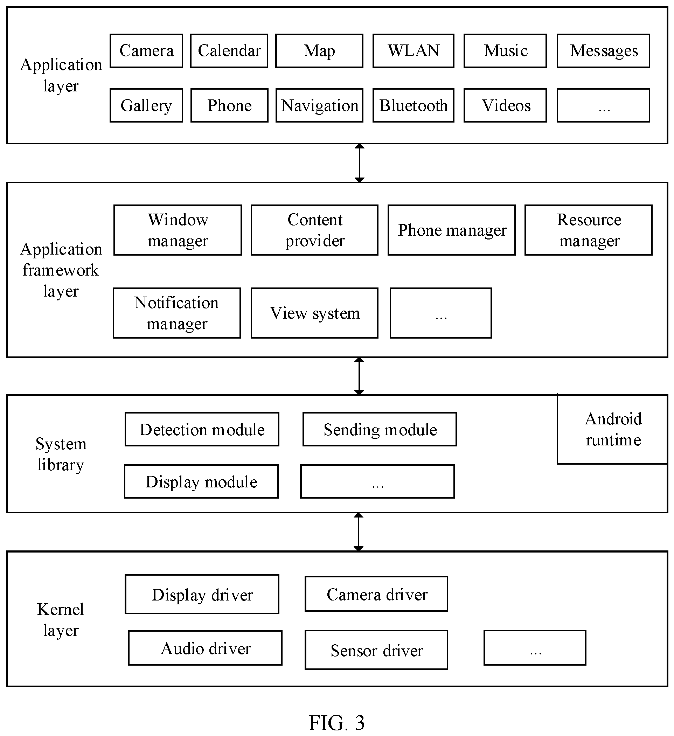

FIG. 3 is a diagram of a software structure of a mobile phone according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer.

The application layer may include a series of application packages.

As shown in FIG. 3, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application program.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is given, the electronic device vibrates, or the indicator blinks.

The Android runtime includes a core library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a detection module, a display module, and a sending module.

In some examples, the display module is configured to display a first transmission object. The detection module is configured to detect whether to approach or touch a first device. The sending module is configured to send object data of the first transmission object to a second device. The display module is further configured to display the first sending animation.

The kernel layer is a layer between hardware and software. The kernel layer includes at least a display driver, a camera driver, an audio driver, and a sensor driver.

With reference to the transmission system shown in FIG. 1, the data transmission method provided in embodiments of this application is specifically described below by using an example in which the first device is the first mobile phone, the second device is the second mobile phone, the first user uses the first mobile phone, and the second user uses the second mobile phone.

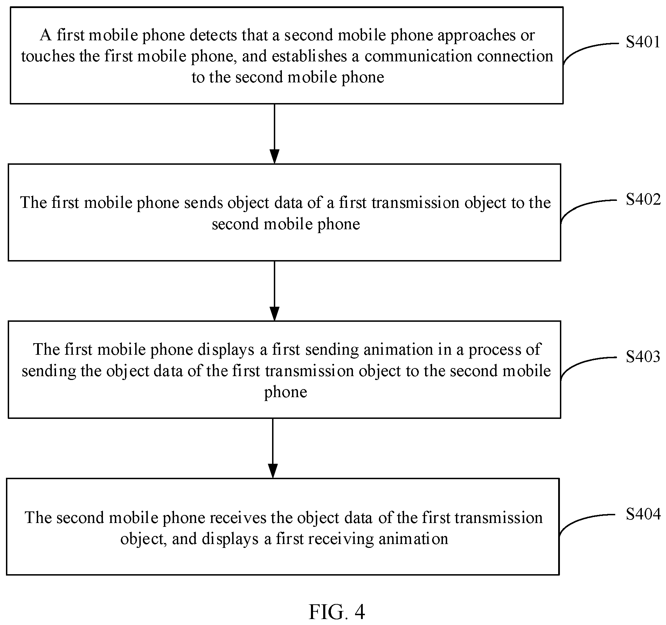

FIG. 4 is a schematic flowchart of a data transmission method according to an embodiment of this application. As shown in FIG. 4, the method may include the following S401 to S404.

S401: The first mobile phone detects that the second mobile phone approaches or touches the first mobile phone, and establishes a communication connection to the second mobile phone.

In some embodiments of this application, the first mobile phone may detect that the second mobile phone approaches or touches the first mobile phone, and establish the communication connection to the second mobile phone.

For example, the first user may use the first mobile phone to approach or touch the second mobile phone used by a second user, to establish the communication connection between the first mobile phone and the second mobile phone. For example, in a process in which the first mobile phone approaches or touches the second mobile phone, when detecting that the second mobile phone approaches the first mobile phone, an acceleration sensor in the first mobile phone may trigger a Bluetooth module in the first mobile phone to establish a Bluetooth communication connection to a Bluetooth module in the second mobile phone. For another example, in a process in which the first mobile phone approaches or touches the second mobile phone, when detecting that the second mobile phone touches the first mobile phone, an acceleration sensor in the first mobile phone may trigger an NFC module in the first mobile phone to establish an NFC communication connection to an NFC module in the second mobile phone.

In other words, in this embodiment of this application, a sensor module (for example, the acceleration sensor) and a communication module (for example, the Bluetooth module) can be used to implement accurate device sensing and interaction control. When two devices touch and are in contact with each other or approach each other, Bluetooth signal scanning may be activated to sense each other and start a subsequent data transmission process.

In some other embodiments of this application, the first mobile phone may further detect, by using other hardware, approaching or touching with another device, and subsequently trigger a process of establishing a communication connection. How to detect approaching to or touching with a device and a subsequent process of establishing a communication connection are not specifically limited in embodiments of this application.

In some embodiments of this application, the communication connection established between the first mobile phone and the second mobile phone includes a wireless communication connection, for example, a WLAN communication connection, a Wi-Fi communication connection, a Bluetooth communication connection, and an NFC communication connection.

In some embodiments of this application, in a process in which the first mobile phone detects that the second mobile phone approaches or touches the first mobile phone, and establishes the communication connection to the second mobile phone, a target animation may be displayed, where the target animation is used to present that it has been detected that the first mobile phone approaches or touches the second mobile phone.

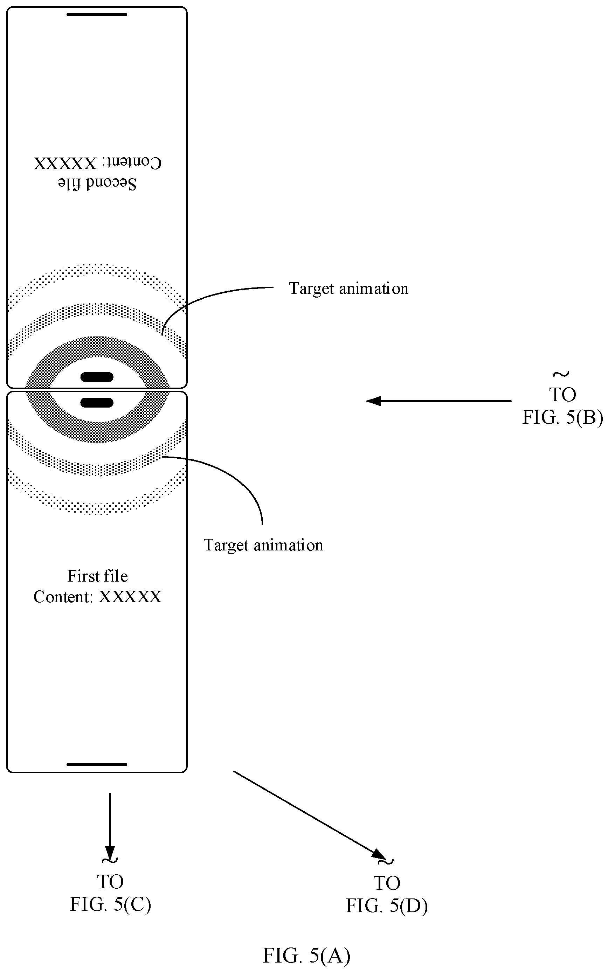

For example, with reference to FIG. 5(A), in a process in which the first user and the second user make the first mobile phone and the second mobile phone approach or touch each other, the first mobile phone and the second mobile phone may display the target animation, where the target animation is used to present that it has been detected that the first mobile phone approaches or touches the second mobile phone, and the target animation may present a dynamic effect of simulating flowing water ripples. In this way, a process in which a mobile phone is touching or approaching another device can be more intuitively prompted to the user.

In some embodiments of this application, before the first mobile phone establishes the communication connection to the second mobile phone, a display picture of the first mobile phone may include a first transmission object. A display picture of the second mobile phone may include a second transmission object. A transmission object may include at least one of a file, a folder, a contact, or an application.

For example, the transmission object may include at least one of a file such as a document, audio, a video, audio and video, or a web page, a folder, an application, contact information in a contact application, or page information in a social application.

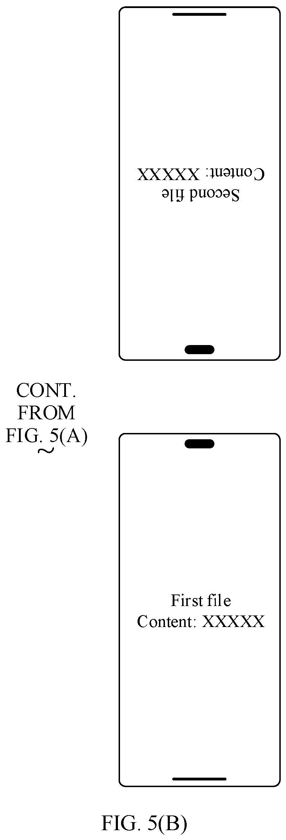

With reference to FIG. 5(B), for example, the first transmission object may be a first file, and the second transmission object may be a second file. Transmission content and a transmission type of the transmission object are not specifically limited in embodiments of this application.

In other words, the first user needs to open the first transmission object, that is, the first transmission object is in an open state or a playing state. When two or more transmission objects are displayed in the display picture of the first mobile phone, the first transmission object may be all transmission objects displayed in a screen of the first mobile phone, may be a transmission object running in a foreground of the first mobile phone, or may be a transmission object located based on a current location of a cursor. This is not specifically limited herein. The second transmission object is similar to the first transmission object. Details are not described herein again.

In some embodiments of this application, after the first mobile phone establishes the communication connection to the second mobile phone, the first mobile phone may generate and display a first image corresponding to the first transmission object.

The first image may include an object screenshot of the first transmission object or an object snapshot corresponding to the first transmission object.

In a feasible implementation, after establishing the communication connection to the second mobile phone, the first mobile phone may generate the object screenshot based on the first transmission object displayed in the display picture.

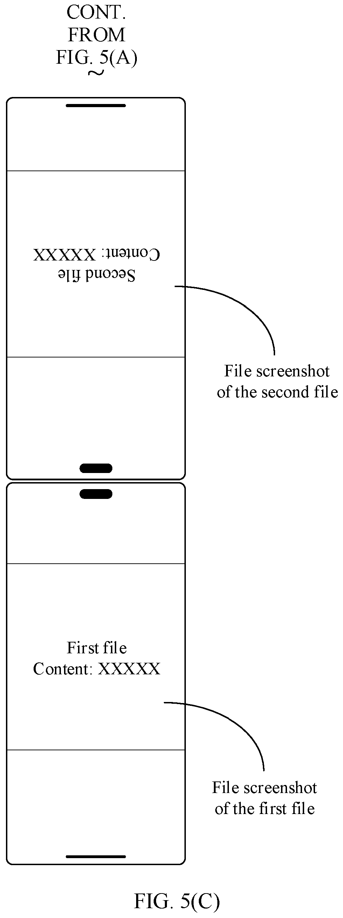

For example, with reference to FIG. 5(C), after establishing a Bluetooth communication connection to the second mobile phone, the first mobile phone may perform a screenshot taking operation on the first file displayed in a display picture, to generate a file screenshot of the first file.

In another feasible implementation, the first mobile phone may extract key object data from transmission object data of the first transmission object. The first mobile phone may further generate the object snapshot based on the key object data.

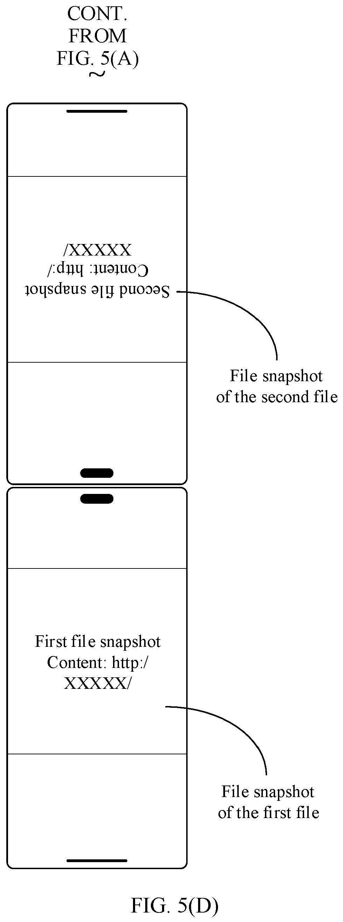

For example, with reference to FIG. 5(D), after establishing the Bluetooth communication connection to the second mobile phone, the first mobile phone may perform content extraction on the first file displayed in the display picture, to extract key content data. The mobile phone may further generate a file snapshot of the first file based on the extracted key content data. For example, the key content data is download address information corresponding to the first file. The file snapshot of the first file may include the download address information, for example, a first file snapshot, and content: http:/XXXXX/.

In some other embodiments of this application, after the first mobile phone establishes the communication connection to the second mobile phone, the second mobile phone may also generate and display a second image corresponding to the second transmission object. The second image may include an object screenshot of the second transmission object or an object snapshot corresponding to the second transmission object.

For example, still with reference to in FIG. 5(C), after establishing the Bluetooth communication connection to the first mobile phone, the second mobile phone may perform a screenshot taking operation on the second file displayed in a display picture, to generate a file screenshot of the second file.

For another example, still with reference to in FIG. 5(D), after establishing the Bluetooth communication connection to the first mobile phone, the second mobile phone may perform content extraction on the second file displayed in the display picture, to extract key content data. The mobile phone may further generate a file snapshot of the second file based on the extracted key content data. For example, the key content data is download address information corresponding to the second file. The file snapshot of the second file may include the download address information, for example, a second file snapshot, and content: http:/XXXXX/.

For another example, when a transmission object is the first file or the second file and the first file or the second file is a web page file, the extracted key content data may be website address information corresponding to the file.

In some embodiments of this application, when the transmission object includes a preset object associated with a specific service, the extracted key content data includes jumping path information, where the jumping path information is used to jump to a service page corresponding to the specific service.

For example, when the transmission object is a file such as a web page or an image, the transmission object may include a preset object associated with a specific service. The preset object may include a commodity, a smart home device, an application, and the like. The commodity may be associated with a commodity application, and the smart home device may be associated with a smart home application. In this way, the extracted key content data may include jumping path information, where the jumping path information is used to jump to a service page corresponding to the specific service.

In some embodiments of this application, the object data of the first transmission object includes the first image, where the first image indicates the first transmission object and is used by the second device to obtain the first transmission object.

Alternatively, the object data of the first transmission object includes the first image and content data of the first transmission object, where the content data of the first transmission object is used by the second device to obtain the first transmission object.

For example, in a process of displaying a first sending animation, the first mobile phone may send the first image and content data of the first file or send the first image to the second mobile phone. When the first image is the object snapshot corresponding to the first transmission object, the first image may be used by the second mobile phone to subsequently obtain the first file. When the first image is the object screenshot corresponding to the first transmission object, the second mobile phone may subsequently obtain the first file based on the content data of the first file.

In this way, in this embodiment of this application, the second mobile phone may obtain the first transmission object based on the first image in the object data, or directly obtain the first transmission object based on the content data in the object data. The user can obtain the first transmission object without performing a series of complex operations. User experience is improved.

S402: The first mobile phone sends the object data of the first transmission object to the second mobile phone.

In some embodiments of this application, after establishing the communication connection to the second mobile phone, the first mobile phone may send the object data of the first transmission object to the second mobile phone.

In a feasible implementation, the object data of the first transmission object may include the first image, where the first image indicates the first transmission object and is used by the second mobile phone to obtain the first transmission object.

For example, after establishing a Bluetooth communication connection to the second mobile phone, the first mobile phone may generate the first image, for example, a file snapshot of the first file. The mobile phone may further send the file snapshot of the first file to the second mobile phone, so that the second mobile phone can subsequently obtain the first file based on the file snapshot of the first file.

In another feasible implementation, the object data of the first transmission object includes the first image and content data of the first transmission object, where the content data of the first transmission object is used by the second mobile phone to obtain the first transmission object.

For example, after establishing a Bluetooth communication connection to the second mobile phone, the first mobile phone may generate the first image, for example, a file screenshot of the first file. The mobile phone may further send the file screenshot of the first file and content data of the first file to the second mobile phone, so that the second mobile phone can subsequently obtain the first file based on the content data of the first file.

In some embodiments of this application, the display picture of the second mobile phone includes the second transmission object. After the second mobile phone establishes the communication connection to the first mobile phone, the second mobile phone may send object data corresponding to the second transmission object to the first mobile phone.

Similarly, the object data of the second transmission object may include the second image, where the second image indicates the second transmission object and is used by the first mobile phone to obtain the second transmission object. Alternatively, the object data of the second transmission object includes the second image and content data of the second transmission object, where the content data of the second transmission object is used by the first mobile phone to obtain the second transmission object.

In some embodiments of this application, in a process in which the first mobile phone sends the object data of the first transmission object and in a process in which the first mobile phone receives the object data of the second transmission object, a device distance between the first mobile phone and the second mobile phone is less than or equal to a communication distance for establishing the communication connection between the first mobile phone and the second mobile phone. Similarly, in a process in which the second mobile phone sends the object data of the second transmission object and receives the object data of the first transmission object, the device distance between the first mobile phone and the second mobile phone is less than or equal to the communication distance for establishing the communication connection between the first mobile phone and the second mobile phone.

In other words, in a process in which the first mobile phone sends data to the second mobile phone or in a process in which the first mobile phone receives data sent by the second mobile phone, the device distance between the first mobile phone and the second mobile phone is less than or equal to the communication distance for establishing the communication connection between the first mobile phone and the second mobile phone. The first mobile phone and the second mobile phone do not need to remain in a collision or proximity state.

For example, a Bluetooth communication connection is established between the first mobile phone and the second mobile phone. In a process in which the first mobile phone sends data to the second mobile phone or in a process in which the first mobile phone receives data sent by the second mobile phone, the device distance between the first mobile phone and the second mobile phone only needs to be kept within a communication distance for the Bluetooth communication connection.

In this way, in this embodiment of this application, in a data transmission process, the user does not need to keep two devices approaching or touching each other. The user can freely move the devices provided that a device distance between the two devices needs to be kept within a communication distance for a communication connection, without limiting device postures of the two devices. Therefore, flexibility of cross-device data transmission is improved, and user experience is improved.

S403: The first mobile phone displays the first sending animation in a process of sending the object data of the first transmission object to the second mobile phone.

The first sending animation is used to present that the first image corresponding to the first transmission object is moved to a screen boundary of the first mobile phone until the first image is moved out of a screen of the first mobile phone.

In some embodiments of this application, in the process of sending the object data of the first transmission object to the second mobile phone, the first mobile phone may directly display the first sending animation.

Specifically, in the process of sending the object data of the first transmission object, the first mobile phone displays the first sending animation based on the generated first image. In the first sending animation, the first image is gradually moved from the screen of the first mobile phone to the screen boundary of the first mobile phone until the first image is moved out of the screen of the first mobile phone.

In this way, in this embodiment of this application, in a cross-device data transmission scenario, the first user may select the first transmission object and control the first mobile phone to approach or touch the second mobile phone. In this way, the first mobile phone may detect the second mobile phone approaching or touching the first mobile phone, and establish the communication connection to the second mobile phone. The first mobile phone may further send the object data of the first transmission object to the second mobile phone, and display the first sending animation. The user does not need to perform a series of complex operations, and a more intuitive dynamic data transmission process can be provided for the user. Therefore, user experience is improved.

In some embodiments of this application, the first mobile phone may display the first image in a process of displaying the first sending animation. The first mobile phone displays the first sending animation in response to a first trigger operation on the first image.

The first trigger operation includes an operation indicating the first image to move to the screen boundary of the first mobile phone. The first trigger operation may include a tap operation, an upward sliding operation, a double-tap operation, a voice operation, and the like on the first image. A specific implementation form corresponding to the first trigger operation is not limited in embodiments of this application.

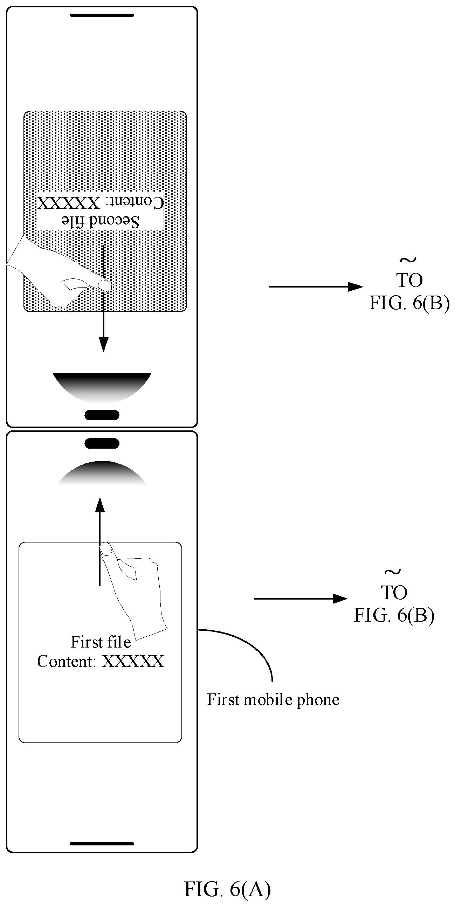

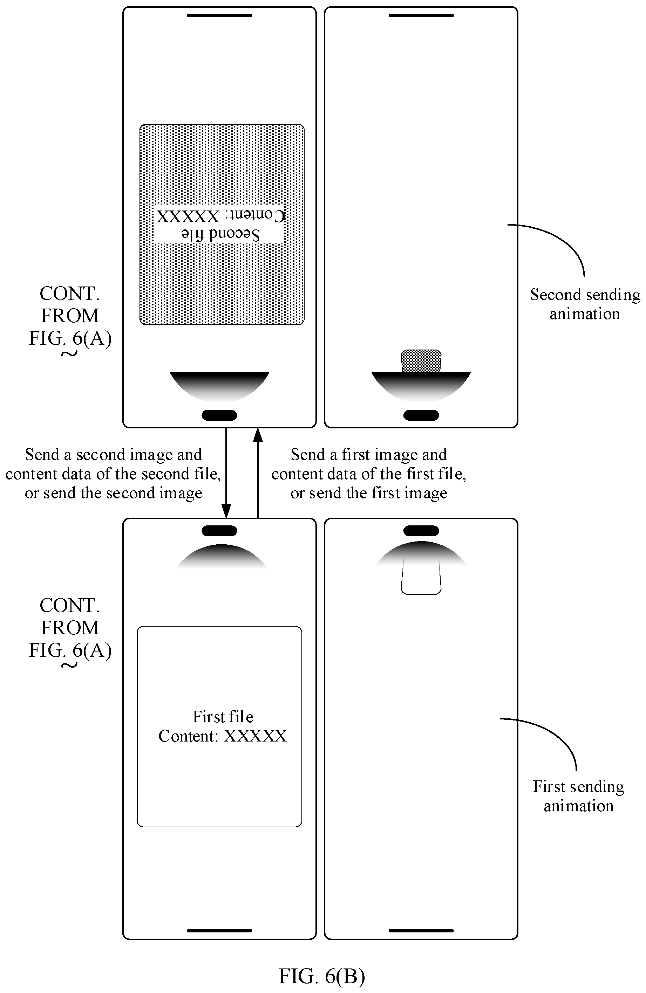

For example, with reference to FIG. 6(A), the first mobile phone may display a file screenshot of a first file. A user may perform an upward sliding operation on the file screenshot of the first file, and the first mobile phone displays a first sending animation in response to the upward sliding operation. With reference to FIG. 6(B), the file screenshot of the first file in the first sending animation may be gradually moved from the screen of the first mobile phone to the screen boundary of the first mobile phone until the file screenshot is moved out of the screen of the first mobile phone.

In this way, the user may perform an operation on the first image to trigger a data sending process. This enhances interactivity and operability between the user and a device and makes data transmission between devices more intuitive.

In some embodiments of this application, in a process of sending the object data corresponding to the second transmission object to the first mobile phone, the second mobile phone may display a second sending animation, where the second animation is used to present that the second image corresponding to the second transmission object is moved to a screen boundary of the second mobile phone until the second image is moved out of a screen of the second mobile phone.

Specifically, the second mobile phone may display the second image in a process of displaying the second sending animation. The second mobile phone displays the second sending animation in response to a trigger operation on the second image.

Similarly, still with reference to FIG. 6(A), the second mobile phone may display a file screenshot of a second file. The user may perform an upward sliding operation on the file screenshot of the second file, and the second mobile phone displays a second sending animation in response to the upward sliding operation. Still with reference to FIG. 6(B), the file screenshot of the second file in the second sending animation may be gradually moved from the screen of the second mobile phone to the screen boundary of the second mobile phone until the file screenshot is moved out of the screen of the second mobile phone. In the process of displaying the second sending animation, the second mobile phone may send the second image and content data of the second file or send the second image to the first mobile phone.

In some embodiments of this application, in a moving process of the first image, a display form of the first image in the first sending animation changes as a moving location changes.

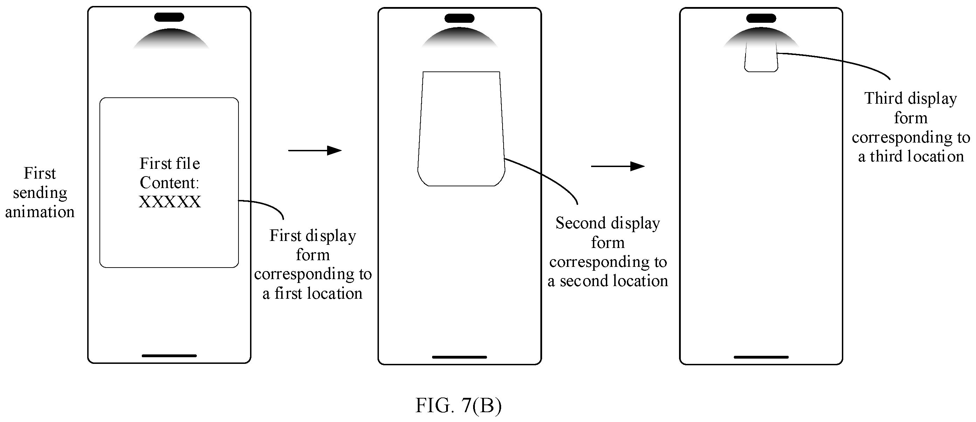

For example, with reference to FIG. 7(B), in the moving process of the first image in the first sending animation, the moving location of the first image is a first location, and the display form of the first image is a first display form. Then, when the moving location of the first image is moved from the first location to a second location, the display form of the first image is adjusted from the first display form to a second display form. Then, when the moving location of the first image is moved from the second location to a third location, the display form of the first image is adjusted from the second display form to a third display form.

In a feasible implementation, a display size of the first image in the first sending animation in the moving process gradually decreases as the moving location changes until the first image fades out of the screen of the first mobile phone.

In another feasible implementation, a display size of the first image in the first sending animation in the moving process gradually decreases as the moving location changes, and a display shape gradually changes as the moving location changes until the first image fades out of the screen of the first mobile phone.

In another feasible implementation, a display size of the first image in the first sending animation in the moving process gradually decreases as the moving location changes, and a display color gradually changes as the moving location changes until the first image fades out of the screen of the first mobile phone.

Similarly, in a moving process of the second image, a display form of the second image in the second sending animation changes as a moving location changes.

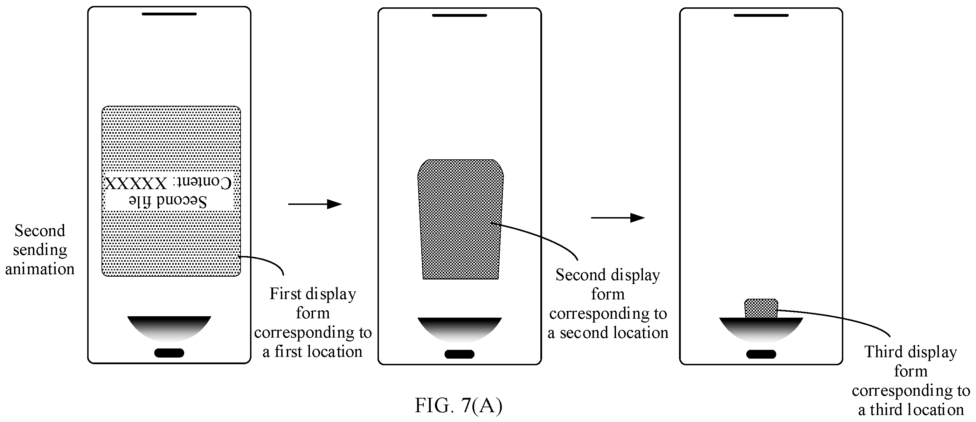

For another example, still with reference to FIG. 7(A), in the moving process of the second image in the second sending animation, the moving location of the second image is a first location, and the display form of the second image is a first display form. Then, when the moving location of the second image is moved from the first location to a second location, the display form of the second image is adjusted from the first display form to a second display form. Then, when the moving location of the second image is moved from the second location to a third location, the display form of the second image is adjusted from the second display form to a third display form.

In a feasible implementation, a display size of the second image in the second sending animation in the moving process gradually decreases as the moving location changes until the second image fades out of the screen of the second mobile phone.

In another feasible implementation, a display size of the second image in the second sending animation in the moving process gradually decreases as the moving location changes, and a display shape gradually changes as the moving location changes until the second image fades out of the screen of the second mobile phone.

In another feasible implementation, a display size of the second image in the second sending animation in the moving process gradually decreases as the moving location changes, and a display color gradually changes as the moving location changes until the second image fades out of the screen of the second mobile phone.

In this embodiment of this application, a display form of an image in an animation may include a display size, a display shape, a display transparency parameter, a display style, and the like. The display form of the image in a moving process may change with at least one of the display size, the display shape, the display transparency parameter, and the display style.

It should be noted that the display form of the image in the moving process is not specifically limited in embodiments of this application.

In this way, in this embodiment of this application, in a process of presenting the first sending animation, the display form of the first image may change as the moving location changes. This improves richness of display forms in an interface, so that the user can more intuitively perceive a data transmission process, and visual experience of the user is improved.

In some embodiments of this application, the first mobile phone may further obtain a target direction corresponding to the first mobile phone, where the target direction is a direction in which a screen center of the first mobile phone points to a top end surface of the first mobile phone, and the first sending animation is used to present that the first image is moved to the screen boundary of the first mobile phone in the target direction corresponding to the first mobile phone until the first image is moved out of the screen of the first mobile phone.

For example, to present an effect that the first image travels between the screen of the first mobile phone and the screen of the second mobile phone, the first mobile phone may obtain the direction in which the screen center points to the top end surface of the first mobile phone. In the process of displaying the first sending animation, the first mobile phone may control the first image in the first sending animation to move based on the obtained solution, so that the first image is moved to the screen boundary of the first mobile phone until the first image is moved out of the screen of the first mobile phone.

In some embodiments of this application, the second mobile phone may also obtain a target direction corresponding to the second mobile phone, where the target direction is a direction in which a screen center of the second mobile phone points to a top end surface of the second mobile phone. In the process in which the second mobile phone displays the second sending animation, the second sending animation is used to present that the second image is moved to the screen boundary of the second mobile phone in the target direction corresponding to the second mobile phone until the second image is moved out of the screen of the second mobile phone.

In this way, in this embodiment of this application, in a process of presenting a sending animation, an image may be moved out of a screen from a direction of a top end surface, so that a scenario in which body moment of a user is to deliver an item to the other party during exchange of the item in life can be simulated. In addition, subsequently, the image may be moved from a top end surface of another device to a screen. This presents a dynamic effect that the image travels between the two screens. Therefore, more intuitive and flexible data transmission experience can be provided for the user, thereby improving user experience.

In some embodiments of this application, in the process of sending the object data of the first transmission object, in response to a second trigger operation on the first image, the first mobile phone does not display the first image, and cancels sending of the object data of the first transmission object to the second mobile phone.

The second trigger operation may include a leftward sliding operation, a rightward sliding operation, a tap operation, a voice operation, and the like on the first image. The second trigger operation includes an operation that is used to skip displaying the first image and cancel sending of the object data of the first transmission object to the second mobile phone. A specific implementation form corresponding to the second trigger operation is not limited in embodiments of this application.

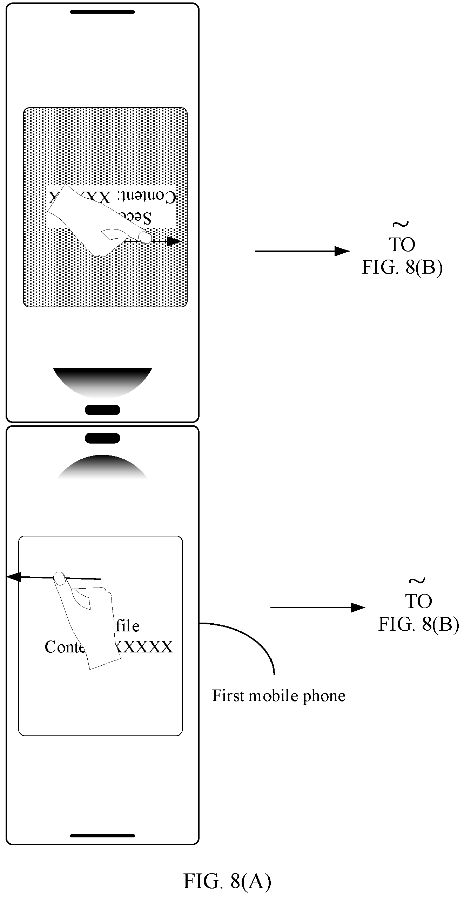

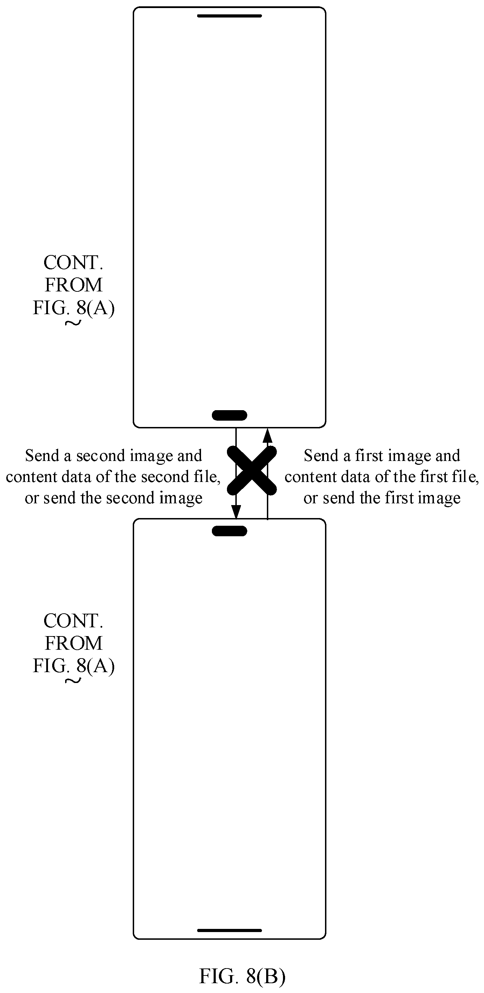

For example, with reference to FIG. 8(A), in the process in which the first mobile phone sends the object data of the first transmission object, or in the process in which the first mobile phone displays the first sending animation, a user may perform a leftward sliding operation on the first image to cancel transmission of the object data of the first transmission object. With reference to FIG. 8(B), the first mobile phone does not display the first image and cancels sending of the object data of the first transmission object to the second mobile phone in response to the leftward sliding operation on the first image. Canceling sending of the object data of the first transmission object to the second mobile phone includes: canceling sending of the first image and the content data of the first file to the second mobile phone, or canceling sending of the first image.

Certainly, the second user may also perform a trigger operation on the second image in the second mobile phone, to trigger the second mobile phone to skip displaying the second image and cancel sending of data to the first mobile phone. A sending cancellation process of the second mobile phone is similar to the sending cancellation process of the first mobile phone. Details are not described herein again.

In this way, in this embodiment of this application, a device may interrupt data sending. The user can interrupt a process in which a device sends data, to improve flexibility of cross-device data transmission. Therefore, user experience is improved.

S404: The second mobile phone receives the object data of the first transmission object, and displays a first receiving animation.

The first receiving animation is used to present that the first image appears from the screen boundary of the second mobile phone and is moved to the screen of the second mobile phone.

In some embodiments of this application, the second mobile phone may receive the object data of the first transmission object, and display the first receiving animation.

Specifically, the object data that is of the first transmission object and that is received by the second mobile phone may include the first image. The second mobile phone may display the first receiving animation based on the first image. The first receiving animation is used to present that the first image appears from the screen boundary of the second mobile phone and is moved to the screen of the second mobile phone.

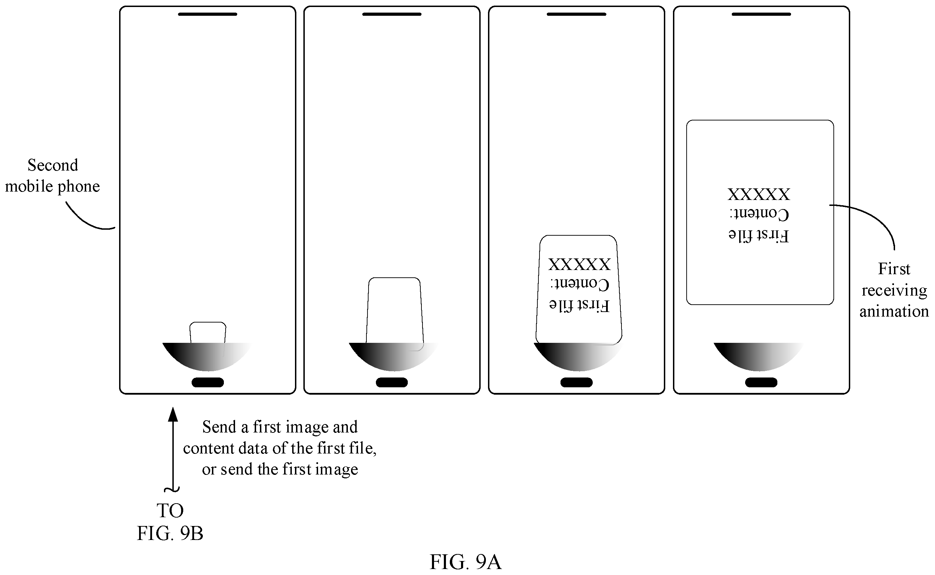

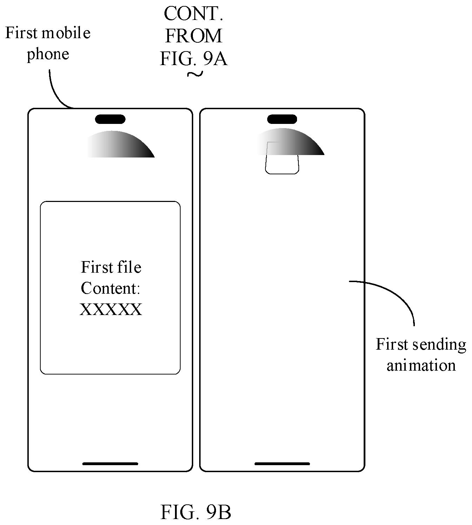

For example, with reference to FIG. 9A and FIG. 9B, the first mobile phone may send the first image to the second mobile phone, or send the first image and the content data of the first file to the second mobile phone. The second mobile phone may receive the first image sent by the first mobile phone, or receive the first image and the content data of the first file that are sent by the first mobile phone. The second mobile phone may display the first receiving animation based on the first image, where the first image in the first receiving animation appears from the screen boundary of the second mobile phone and is moved to the screen of the second mobile phone.

In this way, in this embodiment of this application, the second mobile phone may receive data sent by the first mobile phone, and display a receiving animation. The first image in the receiving animation may be moved from the top end surface of the second mobile phone to the screen. With reference to an effect presented by the first image in the first mobile phone, a dynamic effect that the first image travels between the two screens can be reflected. Therefore, more intuitive and flexible data transmission experience can be provided for the user, thereby improving user experience.

In some embodiments of this application, the first mobile phone may receive the object data that corresponds to the second transmission object and that is sent by the second mobile phone, and display a second receiving animation, where the second receiving animation is used to present that the second image appears from the screen boundary of the first mobile phone and is moved to the screen of the first mobile phone.

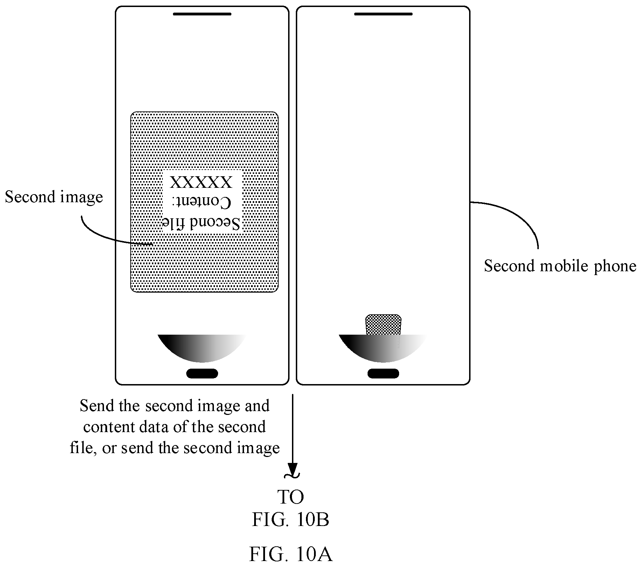

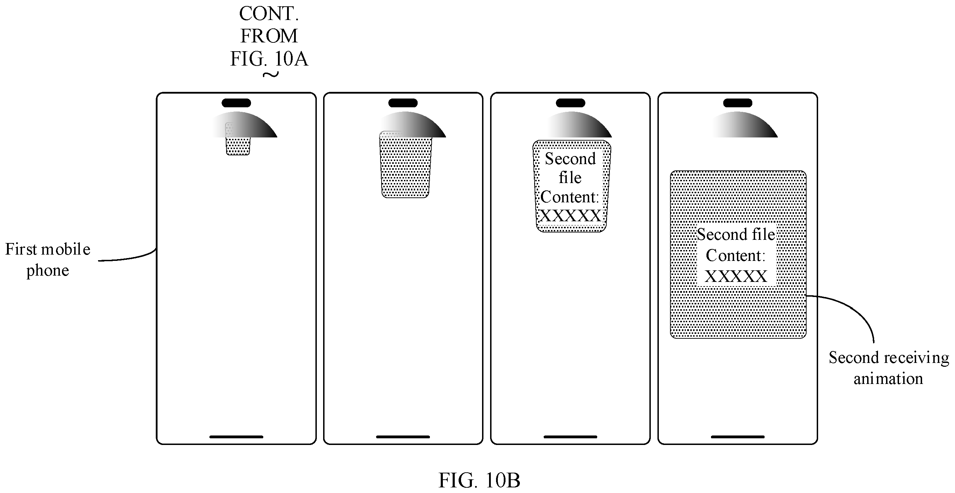

For example, with reference to FIG. 10A and FIG. 10B, the second mobile phone may send the second image to the first mobile phone, or send the second image and the content data of the second file to the first mobile phone. The first mobile phone may receive the second image sent by the second mobile phone, or receive the second image and the content data of the second file that are sent by the second mobile phone. The first mobile phone may display the second receiving animation based on the second image, where the second image in the second receiving animation appears from the screen boundary of the first mobile phone and is moved to the screen of the first mobile phone.

In some embodiments of this application, the object data corresponding to the second transmission object includes the second image, where the second image indicates the second transmission object in the second mobile phone. The first mobile phone may display the second image after displaying the second receiving animation. The first mobile phone may obtain the second transmission object based on the second image in response to a third trigger operation on the second image. The first mobile phone may further search for a target application matching the second transmission object, and display the second transmission object by using the target application.

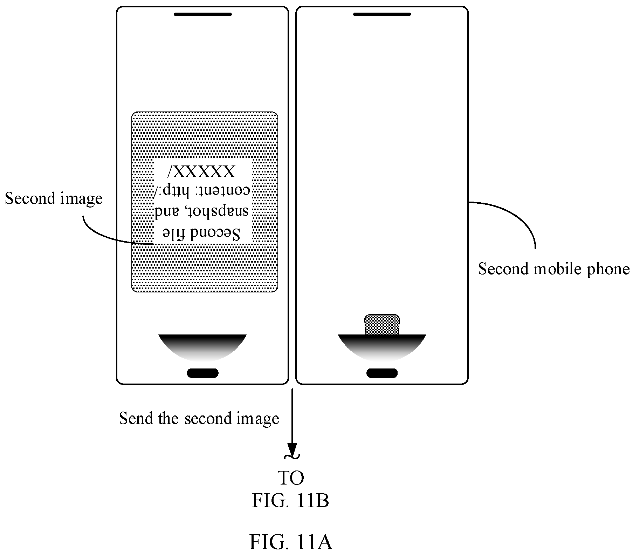

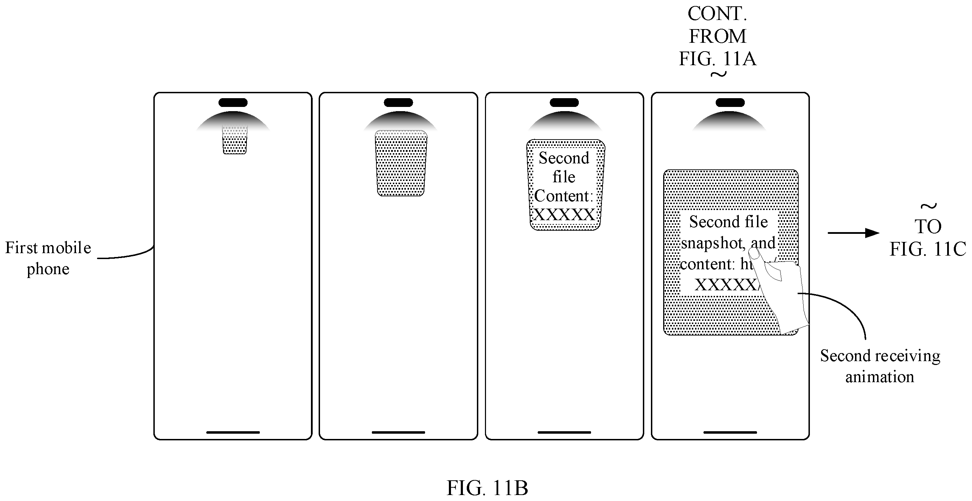

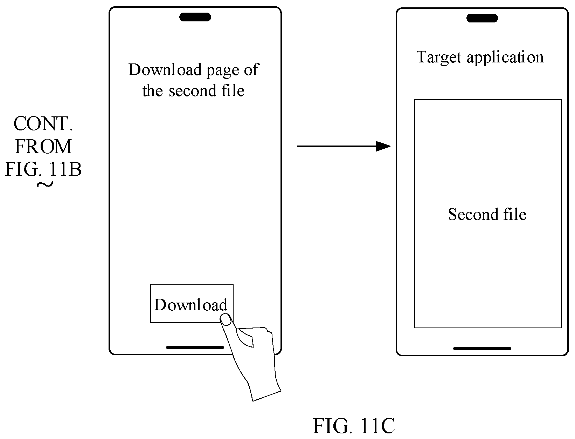

For example, the second transmission object is still the second file. The second mobile phone sends the second image to the first mobile phone, where the second image may be a file snapshot corresponding to the second file, and the file snapshot corresponding to the second file carries download address information corresponding to the second file. With reference to FIG. 11A to FIG. 11C, the first mobile phone may display the download address information corresponding to the second file, for example, a second file snapshot, and content: http:/XXXXX/. The user may tap the download address information corresponding to the second file to trigger a jump to a download page corresponding to the second file. The first mobile phone may jump to the download page corresponding to the second file in response to the tap operation on the download address information. After the second file is downloaded, the first mobile phone may search for a target application matching the second file, and display the second file by using the target application.

In this way, in this embodiment of this application, after receiving an object snapshot sent by a peer device, a local device may automatically obtain a transmission object corresponding to the object snapshot after receiving is completed. In addition, a related application may be further automatically started to display the transmission object, and the user does not need to perform other complex operations, to improve working efficiency of a data transmission process and a data display process.

In some other embodiments of this application, the object data corresponding to the second transmission object includes the second image and the content data of the second transmission object. The first mobile phone may display the second image after displaying the second receiving animation. In response to a third trigger operation on the second image, the first mobile phone may search for a target application matching the content data of the second transmission object, and display the second transmission object by using the target application.

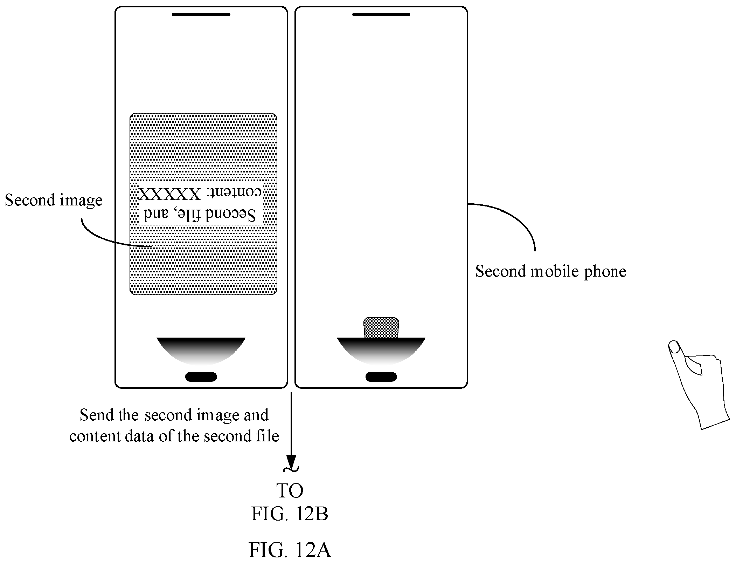

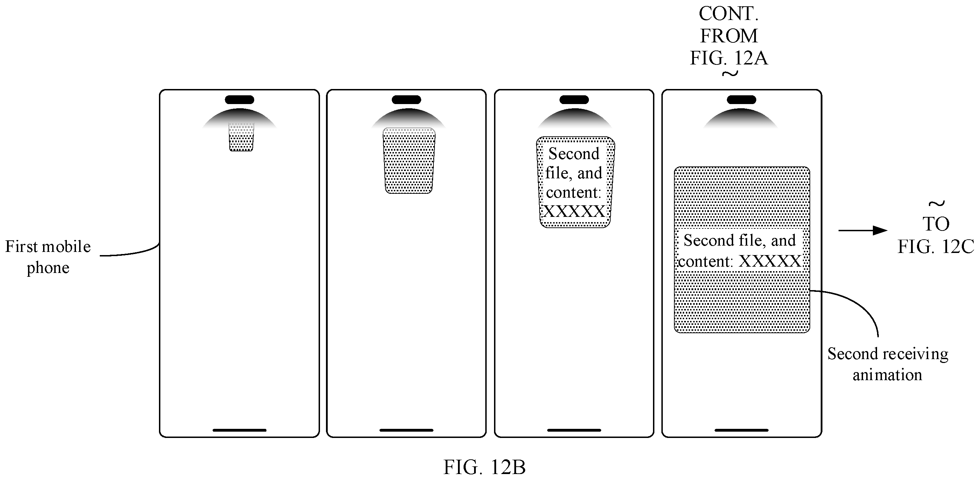

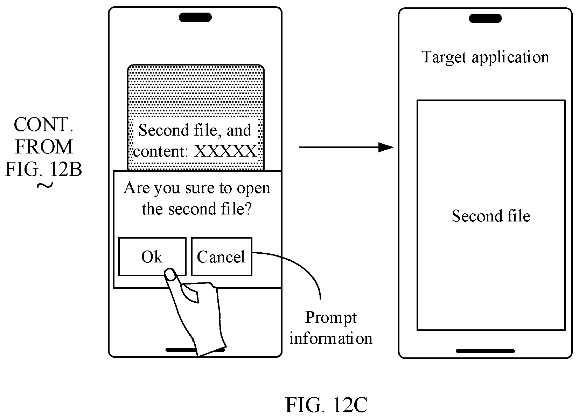

For example, the second transmission object is still the second file. The second mobile phone sends the second image and the content data of the second file to the first mobile phone, where the second image is a file screenshot corresponding to the second file. With reference to FIG. 12A to FIG. 12C, the first mobile phone may display the file screenshot corresponding to the second file and prompt information. The prompt information indicates whether to open the second file. The user may tap the prompt information to trigger opening of the second file. In response to the tap operation on the prompt information, the first mobile phone may search for a target application matching the second file, and display the second file by using the target application.

In this way, in this embodiment of this application, after receiving content data sent by a peer device, a local device may automatically start a related application after receiving is completed, to display a transmission object corresponding to the content data, and the user does not need to perform other complex operations, to improve working efficiency of a data transmission process and a data display process.

In some other embodiments of this application, when the first image in the first sending animation is moved in the target direction, a moving direction of the second image in the second receiving animation is opposite to the target direction.

For example, still with reference to FIG. 7(A) and FIG. 7(B), the first image in the first sending animation is moved in the target direction, that is, the first image is moved in a direction pointing to the top end surface of the first mobile phone. Still with reference to FIG. 10 A and FIG. 10B, the moving direction of the second image in the second receiving animation is opposite to the target direction, that is, the second image is moved in a direction pointing away from the top end surface of the first mobile phone.

In this way, in this embodiment of this application, a moving direction of the first image in the first sending animation is opposite to the moving direction of the second image in the second receiving animation, so that cross-device data transmission can be more intuitive. Therefore, visual experience of the user is improved.

In some other embodiments of this application, the display form of the first image in the first sending animation is different from a display form of the second image in the second receiving animation.

For example, the display size of the first image in the first sending animation is different from a display size of the second image in the second receiving animation.

For another example, the display color of the first image in the first sending animation is different from a display color of the second image in the second receiving animation.

For another example, the display transparency of the first image in the first sending animation is different from display transparency of the second image in the second receiving animation.

In this way, in this embodiment of this application, different sending animations and different receiving animations can be distinguished, so that the user can more intuitively perceive a data transmission process corresponding to data receiving and data sending. This improves richness of animation display, so that cross-device data transmission is more intuitive. Therefore, visual experience of the user is improved.

In some other embodiments of this application, an animation speed of the second receiving animation is negatively correlated with a data amount of the object data of the second transmission object, and an animation speed of the first sending animation is negatively correlated with a data amount of the object data of the first transmission object, or the animation speed of the first sending animation is positively correlated with an operation speed of the first trigger operation.

An animation speed of an animation in a presenting process may be correlated with a data amount of transmitted data.

For example, a larger data amount corresponding to the content data of the first file indicates a smaller animation speed of the first sending animation. On the contrary, a smaller data amount corresponding to the content data of the first file indicates a larger animation speed of the first sending animation.

For another example, a larger data amount corresponding to the content data of the second file indicates a smaller animation speed of the second receiving animation. On the contrary, a smaller data amount corresponding to the content data of the second file indicates a larger animation speed of the second receiving animation.

For another example, a larger operation speed of the first trigger operation indicates a larger animation speed of the first sending animation. On the contrary, a smaller operation speed of the first trigger operation indicates a smaller animation speed of the first sending animation.

In some embodiments of this application, a sending animation presented on a second mobile phone side may also be correlated with a data amount of transmitted data, or may be correlated with an operation speed of the trigger operation on the second image, and an animation speed of a receiving animation may also be correlated with the data amount of the transmitted data. Details are not described herein again.

In this way, in this embodiment of this application, an animation speed corresponding to an animation may vary with a data amount of transmitted data, or may vary with an operation speed of a user-triggered operation. The user can intuitively perceive the data amount of the transmitted data through the animation. The user can also control, by changing the operation speed, a speed of presenting the animation. This further improves richness of displayed content, and interest and interactivity of cross-device data transmission for the user. The user can obtain better data transmission experience.

In some other embodiments of this application, when receiving, in the process of sending the object data of the first transmission object, the object data that is of the second transmission object and that is sent by the second mobile phone, in response to a second trigger operation on the first image, the first mobile phone does not display the first image and cancels sending of the object data of the first transmission object to the second mobile phone.

In other words, in a process of sending data, the first mobile phone may simultaneously receive data sent by the second mobile phone. In this scenario, in response to the second trigger operation on the first image, the first mobile phone may not display the first image and cancel sending of data to the second mobile phone. In this way, the first mobile phone cancels only sending of data to the second mobile phone, without affecting receiving of data sent by the second mobile phone. The first mobile phone may keep displaying the second receiving animation.

In this way, in this embodiment of this application, the two devices may simultaneously send data and receive data. The user may cancel sending of data by a device, that one device cancels sending of data does not affect that another device sends data, and the device can also keep receiving the data sent by the another device. The user can interrupt a process in which a device sends data, to improve flexibility of cross-device data transmission. Therefore, user experience is improved.

In some embodiments of this application, when the second mobile phone sends the object data of the second transmission object in the process in which the first mobile phone sends the object data of the first transmission object, the first mobile phone simultaneously displays the first sending animation and the second receiving animation, and the second mobile phone simultaneously displays the first receiving animation and the second sending animation.

Alternatively, the first mobile phone displays the second receiving animation after displaying the first sending animation, and the second mobile phone displays the first receiving animation after displaying the second sending animation.

Alternatively, the first mobile phone displays the first sending animation after displaying the second receiving animation, and the second mobile phone displays the second sending animation after displaying the first receiving animation.

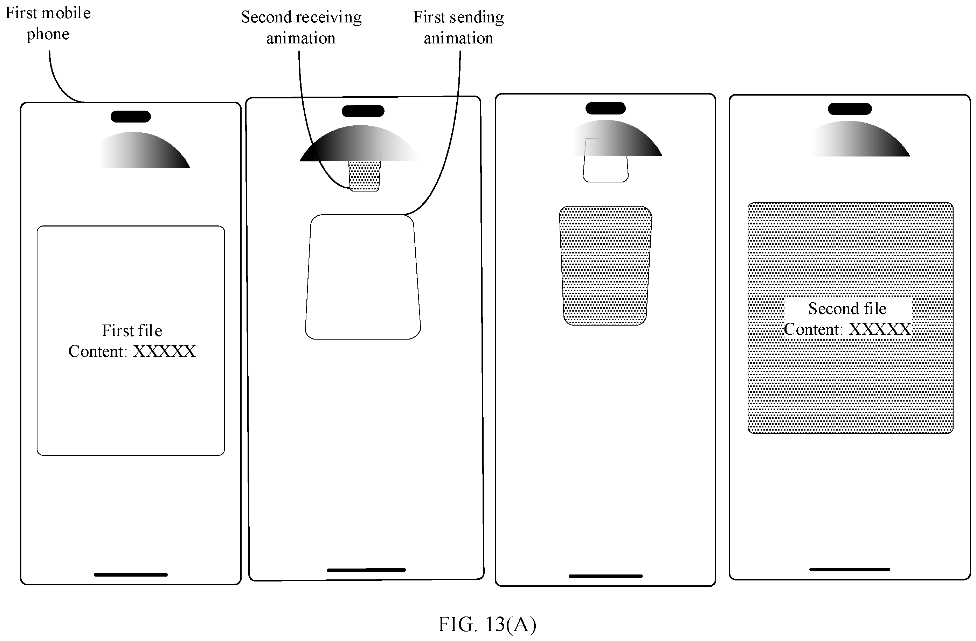

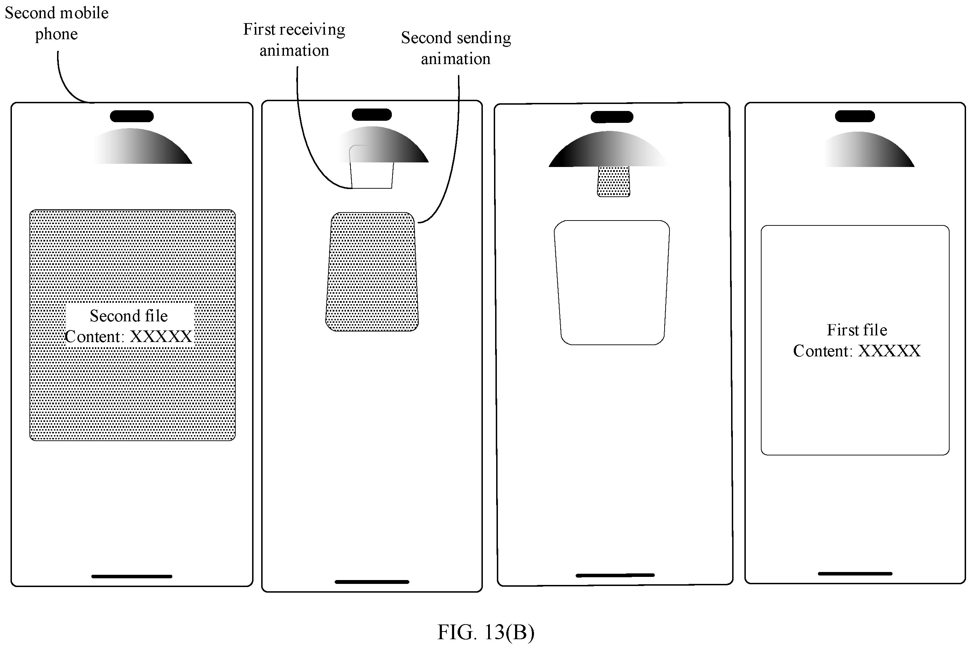

For example, when the second mobile phone sends the object data of the second transmission object in the process in which the first mobile phone sends the object data of the first transmission object, with reference to FIG. 13(A), the first mobile phone may simultaneously display the first sending animation and the second receiving animation. With reference to FIG. 13(B), the second mobile phone may simultaneously display the first receiving animation and the second sending animation.

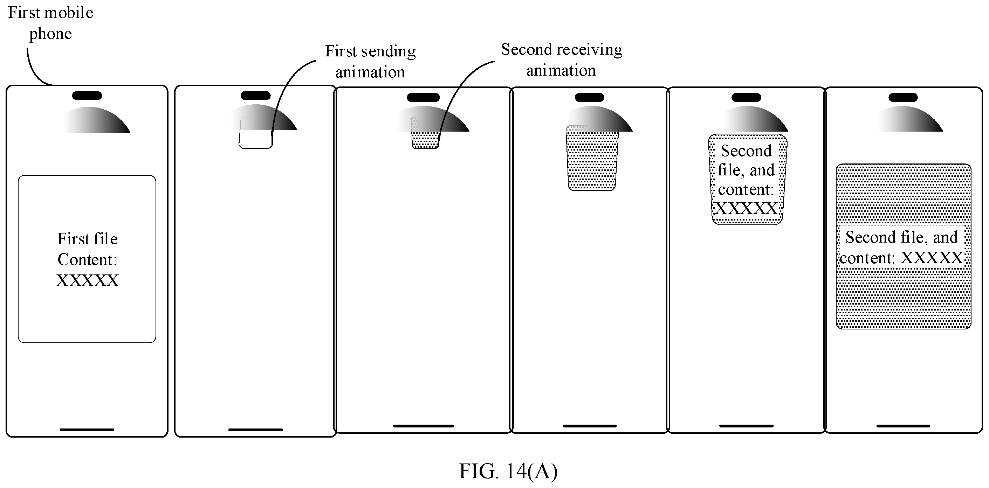

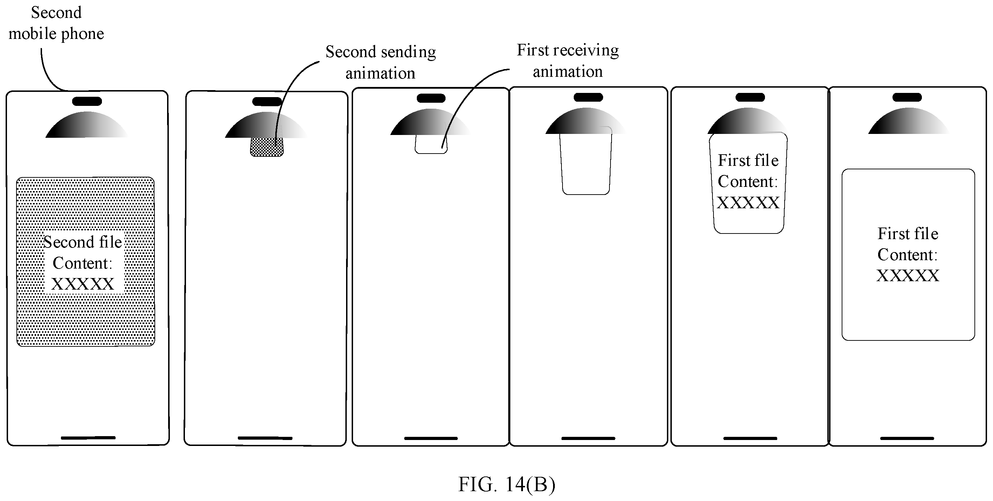

For another example, when the second mobile phone sends the object data of the second transmission object in the process in which the first mobile phone sends the object data of the first transmission object, with reference to FIG. 14(A), the first mobile phone may first display the first sending animation, and then display the second receiving animation. With reference to FIG. 14(B), the second mobile phone may first display the second sending animation, and then display the first receiving animation.

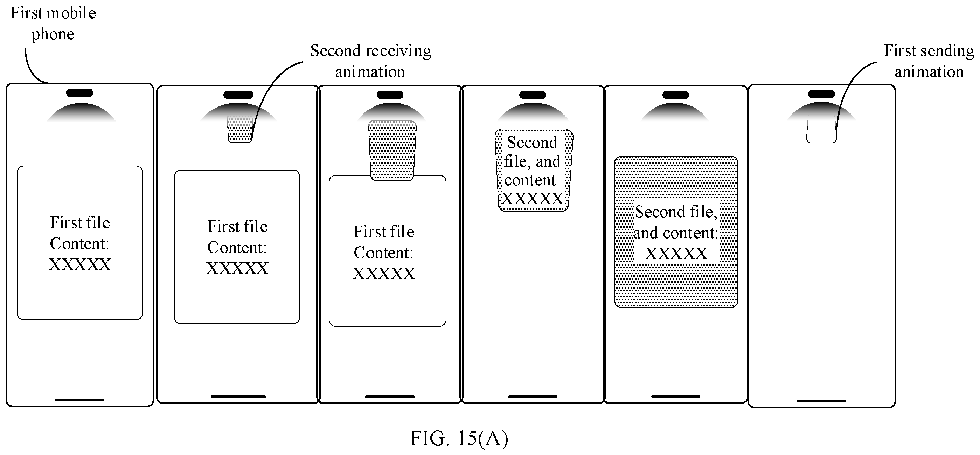

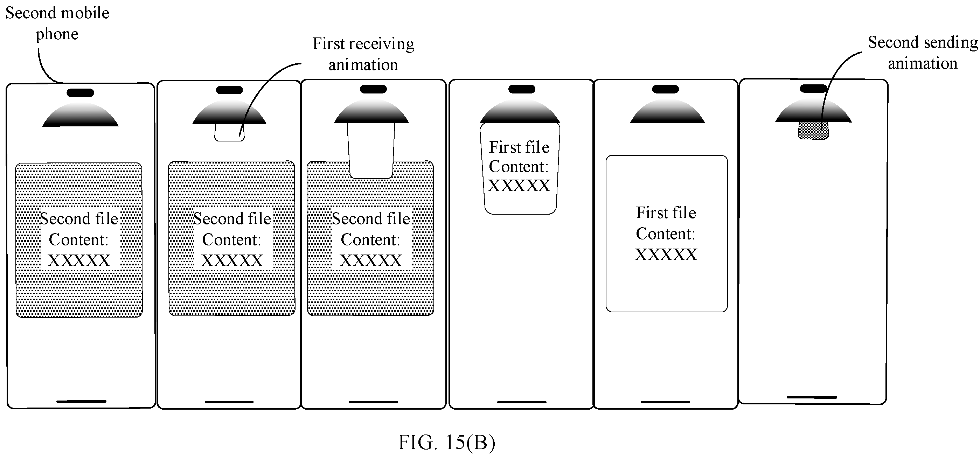

For another example, when the second mobile phone sends the object data of the second transmission object in the process in which the first mobile phone sends the object data of the first transmission object, with reference to FIG. 15(A), the first mobile phone may first display the second receiving animation, and then display the first sending animation. With reference to FIG. 15(B), the second mobile phone may first display the first receiving animation, and then display the second sending animation.

In this embodiment of this application, in the process of sending the object data of the first transmission object, the first mobile phone may receive the object data that is of the second transmission object and that is sent by the second mobile phone. Similarly, in the process of sending the object data of the second transmission object, the second mobile phone may also receive the object data that is of the first transmission object and that is sent by the first mobile phone. In other words, the first mobile phone and the second mobile phone each may perform a data sending process and a data receiving process. Data sending and data receiving may be performed in sequence, or may be performed simultaneously. This improves flexibility of data transmission and improves user experience.

In addition, the first mobile phone and the second mobile phone may display the receiving animations and the sending animations based on an execution time sequence of data sending and data receiving. In this way, in this embodiment of this application, a device simultaneously sends data and receives data, and can also simultaneously display a receiving animation and a sending animation in a process of receiving data and sending data. Certainly, the receiving animation and the sending animation may alternatively be displayed in sequence. This further improves richness of displayed content and interest of cross-device data transmission for the user. The user can obtain better data transmission experience.

In embodiments of this application, the foregoing data transmission and sending may be applied to a plurality of scenarios, for example, a personal data exchange scenario, a product sales scenario, and an education scenario. An application scenario is not specifically limited in embodiments of this application.

In the personal data exchange scenario, two users hope to quickly exchange contact information or send files when meeting each other. In this way, the two users may display the to-be-sent contact information or file on mobile phones, and make the two mobile phones touch each other. The two mobile phones detect a collision, start Bluetooth signal scanning, and automatically establish a Bluetooth communication connection. After establishing the Bluetooth communication connection, the two mobile phones automatically start a data transmission process and an animation display process, so that the two users can quickly exchange the contact information or view the files.

In the product sales scenario, a salesperson hopes to quickly display a chart or a document to a customer. The salesperson may display the to-be-displayed chart or document on a mobile phone and make the mobile phone touch a mobile phone of the customer. The mobile phone of the salesperson detects a collision, starts Bluetooth signal scanning, and automatically establishes a Bluetooth communication connection to the mobile phone of the customer. After the Bluetooth communication connection is established between the two mobile phones, the mobile phone of the salesperson automatically starts a data transmission process and an animation display process, so that the customer can receive and view the chart or the document.

In the education scenario, a teacher hopes to distribute homework to a student or collect homework. Similarly, the teacher and the student may make their own devices touch each other and establish a communication connection, so that the two devices automatically start a data transmission process and an animation display process.

In some solutions, a plurality of embodiments of this application may be combined, and a combined solution is implemented. Optionally, some operations in the procedures of the method embodiments are optionally combined, and/or a sequence of some operations is optionally changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed.

A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

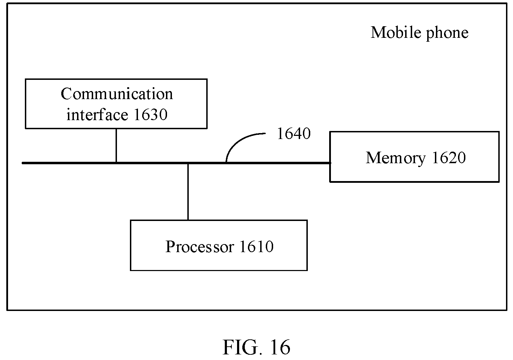

An embodiment of this application further provides an electronic device. For example, the electronic device may be the foregoing mobile phone. As shown in FIG. 16, the mobile phone may include one or more processors 1610, a memory 1620, and a communication interface 1630.

The memory 1620 and the communication interface 1630 are coupled to the processor 1610. For example, the memory 1620 and the communication interface 1630 may be coupled to the processor 1610 through a bus 1640.

The communication interface 1630 is configured to perform data transmission with another device. The memory 1620 stores computer program code. The computer program code includes computer instructions. When the computer instructions are executed by the processor 1610, the electronic device is caused to perform related method steps in embodiments of this application.

The processor 1610 may be a processor or a controller, such as a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content of the present disclosure. Alternatively, the processor may be a combination of processors implementing a computing function, for example, a combination of one or more microprocessors, or a combination of a DSP and a microprocessor.

The bus 1640 may be a peripheral component interconnect (peripheral component interconnect, PCI) bus or an extended industry standard architecture (extended industry standard architecture, EISA) bus, or the like. The bus 1640 may be classified into an address bus, a data bus, a control bus, and the like. For ease of representation, only one bold line is used in FIG. 16 for representation, but this does not mean that there is only one bus or only one type of bus.

An embodiment of this application further provides a communication system. The communication system includes a first device and a second device. A display picture of the first device includes a first transmission object.

The first device is configured to: detect that the second device approaches or touches the first device, and establish a communication connection to the second device.

The first device is configured to send object data of the first transmission object to the second device.

The first device is configured to display a first sending animation in a process of sending the object data of the first transmission object to the second device, where the first sending animation is used to present that a first image corresponding to the first transmission object is moved to a screen boundary of the first device until the first image is moved out of a screen of the first device.

The second device is configured to: receive the object data of the first transmission object, and display a first receiving animation, where the first receiving animation is used to present that the first image appears from a screen boundary of the second device and is moved to a screen of the second device.

An embodiment of this application further provides an electronic device. The electronic device includes a memory and one or more processors. The memory is coupled to the processor. The memory stores computer program code, and the computer program code includes computer instructions. When the computer instructions are executed by the processor, the electronic device is caused to perform related method steps in the foregoing method embodiments.

An embodiment of this application further provides a communication apparatus. The communication apparatus includes a memory and one or more processors. The memory is coupled to the processor. The memory stores computer program code, and the computer program code includes computer instructions. When the computer instructions are executed by the processor, the communication apparatus is caused to perform related method steps in the foregoing method embodiments.

An embodiment of this application further provides a computer-readable storage medium. The compute storage medium stores computer program code. When the processor executes the computer program code, the electronic device performs related method steps in the foregoing method embodiments.

An embodiment of this application further provides a computer program product. The computer program product includes instructions. When the instructions are run on a computer or a processor, the computer or the processor is caused to perform related method steps in the foregoing method embodiments.

An embodiment of this application further provides a chip system, including a processor. The processor is coupled to a memory. The memory is configured to store a program or instructions. When the program or the instructions are executed by the processor, the chip system is caused to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (Application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

The electronic device, the computer storage medium, or the computer program product provided in this application is configured to perform the corresponding method provided above. Therefore, for beneficial effect that can be achieved by the electronic device, the computer storage medium, or the computer program product, refer to the beneficial effects in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the part essentially contributing to the technical solutions in embodiments of this application or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a communication system, wherein the communication system comprises a first device and a second device, a display picture of the first device comprises a first transmission object, and the method comprises:
detecting, by the first device, that the second device approaches or touches the first device, and establishing a communication connection to the second device;
sending, by the first device, object data of the first transmission object to the second device;
displaying, by the first device, a first sending animation in a process of sending the object data of the first transmission object to the second device, wherein the first sending animation is used to present that a first image corresponding to the first transmission object is moved to a screen boundary of the first device until the first image is moved out of a screen of the first device; and
receiving, by the second device, the object data of the first transmission object, and displaying a first receiving animation, wherein the first receiving animation is used to present that the first image appears from a screen boundary of the second device and is moved to a screen of the second device.

2. The method according to claim 1, wherein a display picture of the second device comprises a second transmission object, and the method further comprises:
sending, by the second device, object data corresponding to the second transmission object to the first device;
displaying, by the second device, a second sending animation in a process of sending the object data corresponding to the second transmission object to the first device, wherein the second sending animation is used to present that a second image corresponding to the second transmission object is moved to the screen boundary of the second device until the second image is moved out of the screen of the second device; and
receiving, by the first device, the object data corresponding to the second transmission object, and displaying a second receiving animation, wherein the second receiving animation is used to present that the second image appears from the screen boundary of the first device and is moved to the screen of the first device.

3. The method according to claim 2, wherein when the second device sends the object data of the second transmission object in the process in which the first device sends the object data of the first transmission object, the first device simultaneously displays the first sending animation and the second receiving animation, and the second device simultaneously displays the first receiving animation and the second sending animation; or
the first device displays the second receiving animation after displaying the first sending animation, and the second device displays the first receiving animation after displaying the second sending animation; or
the first device displays the first sending animation after displaying the second receiving animation, and the second device displays the second sending animation after displaying the first receiving animation.

4. A data transmission method, applied to a first device, wherein a display picture of the first device comprises a first transmission object, and the method comprises:
detecting that the first device approaches or touches a second device, and establishing a communication connection to the second device;
sending object data of the first transmission object to the second device; and
displaying a first sending animation in a process of sending the object data of the first transmission object to the second device, wherein the first sending animation is used to present that a first image corresponding to the first transmission object is moved to a screen boundary of the first device until the first image is moved out of a screen of the first device.

5. The method according to claim 4, wherein the method further comprises:
displaying the first image; and
displaying the first sending animation comprises:
displaying the first sending animation in response to a first trigger operation on the first image, wherein the first trigger operation comprises an operation indicating the first image to move to the screen boundary of the first device.

6. The method according to claim 4 or 5, wherein in a moving process of the first image, a display form of the first image in the first sending animation changes as a moving location changes.

7. The method according to claim 6, wherein a display size of the first image in the first sending animation in the moving process gradually decreases as the moving location changes until the first image fades out of the screen of the first device.

8. The method according to any one of claims 5 to 7, wherein the method further comprises:
obtaining a target direction, wherein the target direction is a direction in which a screen center of the first device points to a top end surface of the first device, and the first sending animation is used to present that the first image is moved to the screen boundary of the first device in the target direction until the first image is moved out of the screen of the first device.

9. The method according to claim 8, wherein a display picture of the second device comprises a second transmission object, and the method further comprises:
receiving object data that corresponds to the second transmission object and that is sent by the second device, and displaying a second receiving animation, wherein the second receiving animation is used to present that a second image corresponding to the second transmission object appears from the screen boundary of the first device and is moved to the screen of the first device.

10. The method according to claim 9, wherein in a process in which the first image in the first sending animation is moved in the target direction, a moving direction of the second image in the second receiving animation is opposite to the target direction.

11. The method according to claim 9 or 10, wherein the display form of the first image in the first sending animation is different from a display form of the second image in the second receiving animation.

12. The method according to any one of claims 9 to 11, wherein when the first device receives, in the process of sending the object data of the first transmission object, the object data that is of the second transmission object and that is sent by the second device, the first sending animation and the second receiving animation are simultaneously displayed, or the first sending animation is displayed after the second receiving animation is displayed, or the second receiving animation is displayed after the first sending animation is displayed.

13. The method according to any one of claims 9 to 12, wherein an animation speed of the second receiving animation is negatively correlated with a data amount of the object data of the second transmission object, and an animation speed of the first sending animation is negatively correlated with a data amount of the object data of the first transmission object, or the animation speed of the first sending animation is positively correlated with an operation speed of the first trigger operation.

14. The method according to any one of claims 9 to 13, wherein the method further comprises:
when the first device receives, in the process of sending the object data of the first transmission object, the object data that is of the second transmission object and that is sent by the second device, in response to a second trigger operation on the first image, skipping displaying the first image and canceling sending of the object data of the first transmission object to the second device; and
keeping displaying the second receiving animation.

15. The method according to any one of claims 9 to 14, wherein the object data corresponding to the second transmission object comprises the second image, the second image indicates the second transmission object in the second device, and the method further comprises:
displaying the second image after displaying the second receiving animation;
in response to a third trigger operation on the second image, obtaining the second transmission object based on the second image;
searching for a target application matching the second transmission object; and
displaying the second transmission object by using the target application.

16. The method according to any one of claims 9 to 14, wherein the object data corresponding to the second transmission object comprises the second image and content data of the second transmission object, and the method further comprises:
displaying the second image after displaying the second receiving animation;
in response to a third trigger operation on the second image, searching for a target application matching the content data of the second transmission object; and
displaying the second transmission object by using the target application.

17. The method according to any one of claims 4 to 16, wherein the object data of the first transmission object comprises the first image, and the first image indicates the first transmission object and is used by the second device to obtain the first transmission object; or
the object data of the first transmission object comprises the first image and content data of the first transmission object, and the content data of the first transmission object is used by the second device to obtain the first transmission object.

18. The method according to any one of claims 9 to 16, wherein in a process in which the first device sends the object data of the first transmission object and in a process in which the first device receives the object data of the second transmission object, a device distance between the first device and the second device is less than or equal to a communication distance for establishing the communication connection between the first device and the second device.

19. The method according to any one of claims 4 to 18, wherein the first image comprises an object screenshot of the first transmission object or an object snapshot corresponding to the first transmission object, and the method further comprises:
generating the object screenshot based on the first transmission object displayed in the display picture; or
extracting key object data from transmission object data of the first transmission object; and
generating the object snapshot based on the key object data.

20. The method according to any one of claims 4 to 19, wherein the method further comprises:
displaying a target animation, wherein the target animation is used to present that it has been detected that the first device approaches or touches the second device.

21. The method according to any one of claims 4 to 20, wherein the first transmission object comprises at least one of a file, a folder, a contact, or an application.

22. A data transmission method, applied to a second device, wherein the method comprises:
detecting that the second device approaches or touches a first device, and establishing a communication connection to the first device; and
displaying a first receiving animation in a process of receiving object data that corresponds to the first transmission object and that is sent by the first device, wherein the first receiving animation is used to present that a first image appears from a screen boundary of the second device and is moved to a screen of the second device, and the first image is an image corresponding to the first transmission object displayed in the first device.

23. The method according to claim 22, wherein a display picture of the second device comprises a second transmission object, and the method further comprises:
sending object data corresponding to the second transmission object to the first device; and
displaying a second sending animation in a process of sending the object data corresponding to the second transmission object to the first device, wherein the second sending animation is used to present that a second image corresponding to the transmission object is moved to the screen boundary of the second device until the second image is moved out of the screen of the second device.

24. An electronic device, wherein the electronic device comprises a memory and one or more processors, the memory is coupled to the processor, the memory stores computer program code, the computer program code comprises computer instructions, and when the computer instructions are executed by the processor, the electronic device is caused to perform the method according to any one of claims 4 to 21 or perform the method according to claim 22 or 23.

25. A communication system, wherein the communication system comprises a first device and a second device, and a display picture of the first device comprises a first transmission object;
the first device is configured to: detect that the second device approaches or touches the first device, and establish a communication connection to the second device;
the first device is configured to send object data of the first transmission object to the second device;
the first device is configured to display a first sending animation in a process of sending the object data of the first transmission object to the second device, wherein the first sending animation is used to present that a first image corresponding to the first transmission object is moved to a screen boundary of the first device until the first image is moved out of a screen of the first device; and
the second device is configured to: receive the object data of the first transmission object, and display a first receiving animation, wherein the first receiving animation is used to present that the first image appears from a screen boundary of the second device and is moved to a screen of the second device.

26. A computer-readable medium, wherein the computer-readable storage medium stores instructions, and when the instructions are run on an electronic device, the electronic device is caused to perform the method according to any one of claims 4 to 21 or perform the method according to claim 22 or 23.

27. A computer program product, wherein the computer program product comprises instructions, and when the instructions are run on a computer or a processor, the computer or the processor is caused to perform the method according to any one of claims 4 to 21 or perform the method according to claim 22 or 23.
